(19) Europäisches Patentamt
European Patent Office
Office européen des brevets

(11) EP 4 811 918 A1

(12) EUROPEAN PATENT APPLICATION
published in accordance with Art. 153(4) EPC

(43) Date of publication:
**23.09.2026 Bulletin 2026/39**

(21) Application number: **23958535.9**

(22) Date of filing: **15.11.2023**

(51) International Patent Classification (IPC):
***H04W 74/08*** *(2024.01)*

(52) Cooperative Patent Classification (CPC):
**H04W 74/08**

(86) International application number:
**PCT/CN2023/131694**

(87) International publication number:
**WO 2025/102253 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HE, Chuanfeng**
**Dongguang, Guangdong 523860 (CN)**

(74) Representative: **Novagraaf Technologies**
**2 rue Sarah Bernhardt**
**CS90017**
**92665 Asnières-sur-Seine Cedex (FR)**

# (54) CHANNEL TRANSMISSION METHOD, APPARATUS, DEVICE AND STORAGE MEDIUM

(57) The present disclosure relates to the field of zero power consumption. Disclosed are a channel transmission method, apparatus and device and a storage medium. The method comprises: determining, on the basis of the energy storage energy of the terminal device, a sending mode of a physical random access channel (PRACH). The method is beneficial to the terminal device for determining, on the basis of the energy storage energy thereof, a sending mode that can adapt to the current energy storage energy in a variety of different sending modes. By specifying the sending mode of the PRACH, PRACH sending failures caused by insufficient energy storage of the terminal device can be effectively reduced, and energy waste caused by meaningless attempts of the terminal device is avoided.

Determining the transmission mode of PRACH based on the stored energy of the terminal device — 220

FIG. 4



Processed by Luminess, 75001 PARIS (FR)

## Description

### TECHNICAL FIELD

Embodiments of the present disclosure relate to the field of zero-power, and in particular, relate to a channel transmission method and apparatus, and a device and a storage medium thereof.

### RELATED ART

In the case where a terminal device is an active device, the terminal device primarily relies on battery power when performing a random access procedure. That is, when transmitting a physical random access channel (PRACH), the terminal device does not need to consider the energy source, and only needs to limit the maximum transmit power for transmitting the PRACH.

In the related art, cellular networks support the access of zero-power devices. Since the energy of zero-power devices comes from ambient energy and zero-power devices have limited energy storage capacity, this may cause a failure in transmitting the PRACH during random access. How to improve the success rate of PRACH transmission by zero-power devices is an unsolved technical problem.

### SUMMARY

Embodiments of the present disclosure provide a channel transmission method and apparatus, and a device and a storage medium thereof. The technical solutions are as follows:

In one aspect, the embodiments of the present disclosure provide a channel transmission method, wherein the method is performed by a terminal device. The terminal device is powered by harvesting ambient energy, and the method includes:

determining a transmission mode of a PRACH based on stored energy of the terminal device.

In another aspect, the embodiments of the present disclosure provide a channel transmission method, wherein the method is performed by a network device. The method includes:

receiving a PRACH, wherein a transmission mode of the PRACH is determined based on stored energy of a terminal device, the terminal device being powered by harvesting ambient energy.

In another aspect, the embodiments of the present disclosure provide a channel transmission apparatus. The apparatus includes:

a determining module, configured to determine a transmission mode of a PRACH based on stored energy of the terminal device.

In another aspect, the embodiments of the present disclosure provide a channel transmission apparatus. The apparatus includes:

a receiving module, configured to receive a PRACH, wherein a transmission mode of the PRACH is determined based on stored energy of a terminal device, the terminal device being powered by harvesting ambient energy.

In another aspect, the embodiments of the present disclosure provide a terminal device. The terminal device includes a processor.

The processor is configured to determine a transmission mode of a PRACH based on stored energy of the terminal device.

In another aspect, the embodiments of the present disclosure provide a network device. The network device includes a processor and a receiver connected to the processor.

The receiver is configured to receive a PRACH, wherein a transmission mode of the PRACH is determined based on stored energy of a terminal device. The terminal device is powered by harvesting ambient energy.

In another aspect, the embodiments of the present disclosure provide a computer-readable storage medium. The computer-readable storage medium stores one or more computer programs, which when executed by a processor, cause the processor to perform the channel transmission method as described above.

In another aspect, the embodiments of the present disclosure provide a chip. The chip includes a programmable logic circuit and/or one or more program instructions. The chip, when running on a terminal device or network device, causes the terminal device or network device to perform the channel transmission method as described above.

In another aspect, the embodiments of the present disclosure provide a computer program product. The computer program product includes one or more computer instructions stored in a computer-readable storage medium. The one or more computer instructions, when read from the computer-readable storage medium and executed by a processor of a communication device, cause the communication device to perform the channel transmission method as described above.

In another aspect, the embodiments of the present disclosure provide a computer program. The computer

program, when executed by a processor of a communication device, causes the communication device to perform the channel transmission method as described above.

The technical solutions according to the embodiments of the present disclosure achieve the following beneficial effects: enabling a terminal device to determine a transmission mode that matches its current stored energy from a plurality of different transmission modes based on its own stored energy, thereby effectively reducing PRACH transmission failures caused by insufficient stored energy of the terminal device and minimizing energy waste resulting from unnecessary PRACH transmission attempts by the terminal device.

## BRIEF DESCRIPTION OF DRAWINGS

FIG. 1 illustrates a schematic diagram of repetition of PRACH according to the related art;
FIG. 2 illustrates a schematic diagram of a communication system according to some exemplary embodiments of the present disclosure;
FIG. 3 illustrates a schematic diagram of the backscattering communication process according to the related art;
FIG. 4 illustrates a flowchart of a channel transmission method according to some embodiments of the present disclosure;
FIG. 5 illustrates a flowchart of a channel transmission method according to some embodiments of the present disclosure;
FIG. 6 illustrates a schematic diagram of a channel transmission method according to some embodiments of the present disclosure;
FIG. 7 illustrates a schematic diagram of a channel transmission method according to some embodiments of the present disclosure;
FIG. 8 illustrates a schematic diagram of a channel transmission method according to some embodiments of the present disclosure;
FIG. 9 illustrates a flowchart of a channel transmission method according to some embodiments of the present disclosure;
FIG. 10 illustrates a flowchart of a channel transmission method according to some embodiments of the present disclosure;
FIG. 11 illustrates a flowchart of a channel transmission method according to some embodiments of the present disclosure;
FIG. 12 illustrates a schematic diagram of a channel transmission method according to some embodiments of the present disclosure;
FIG. 13 illustrates a flowchart of a channel transmission method according to some embodiments of the present disclosure;
FIG. 14 illustrates a structural block diagram of a channel transmission apparatus according to some embodiments of the present disclosure;
FIG. 15 illustrates a structural block diagram of a channel transmission apparatus according to some embodiments of the present disclosure; and
FIG. 16 illustrates a schematic structural diagram of a communication device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings. Exemplary embodiments are described in detail herein, with examples shown in the accompanying drawings. When the following description refers to the accompanying drawings, unless otherwise indicated, the same numerals in different accompanying drawings represent the same or similar elements. The implementations described in the following exemplary embodiments do not represent all implementations consistent with the present disclosure. Instead, they are merely examples of apparatus and methods consistent with some aspects of the present disclosure as detailed in the appended claims. For embodiments in the present disclosure, all other embodiments obtained by those of ordinary skill in the art without creative effort fall within the scope of protection of the present disclosure. The terms used in the present disclosure are solely for the purpose of describing specific embodiments and are not intended to limit the disclosure. The singular forms of "a", "an", "the", and "this" used in the present disclosure and the appended claims are also intended to include the plural forms, unless the context clearly indicates otherwise. It should also be understood that the term "and/or" used herein refers to and includes any or all possible combinations of one or more associated listed items. It should be

understood that although terms "first", "second", "third", and the like may be used herein to describe various information, such information should not be limited to these terms. These terms are only used to distinguish one piece of information of the same type from another. For example, without departing from the scope of the present disclosure, first information may also be referred to as second information, and similarly, second information may also be referred to as first information. Depending on the context, the word "if" as used herein may be interpreted as "in the case where", "when" or "in response to determining".

First, relevant technologies involved in the embodiments of the present disclosure are described as follows.

**·PRACH in the random access procedure:**

In the new radio (NR) technology, PRACH resources configured for accessing terminal devices are defined, including 256 configurations. The random access channel (RACH) resource configuration information used by the cell is indicated to the accessing terminal device in system information. Each PRACH resource configuration includes a random access preamble, a periodicity, a radio frame offset, a subframe number within a radio frame, a starting symbol within a subframe, the number of PRACH slots within the subframe, the number of PRACH occasions within a PRACH slot, and a duration of a PRACH occasion. Through these indicated information, the time, frequency, and code information of the PRACH resources can be determined.

Based on the RACH resource configuration indicated by the system information, an association relationship between a synchronization signal and physical broadcast channel (PBCH) block (SSB) and PRACH resources is also indicated, allowing the terminal device to determine the PRACH resources it can use, including PRACH occasion and preamble, based on the detected association relationship between the SSB and PRACH resources. The terminal device determines a SSB that meets a reference signal received power (RSRP) threshold based on measurement results of the SSB, and uses the PRACH resource associated with the SSB to transmit the preamble.

In the random access procedure, the primary function of the preamble transmitted by the terminal device is to inform a network device of a random access request. After transmitting the preamble, the terminal device monitors a physical downlink control channel (PDCCH) within a random access response (RAR) window (also referred to as RA Response window) to receive an RAR corresponding to a random access-radio network temporary identifier (RA-RNTI). The terminal device detects a RAR each time after transmitting a preamble. If no RAR is received from the network device within the RAR window, the terminal device retransmits the preamble on a next available PRACH resource, and the power of the preamble is ramped up by one step. The network device configures a maximum number of preamble transmissions. If the terminal device still fails to receive the RAR after the maximum number of preamble transmissions is reached, the random access procedure fails.

**·Repetition of PRACH:**

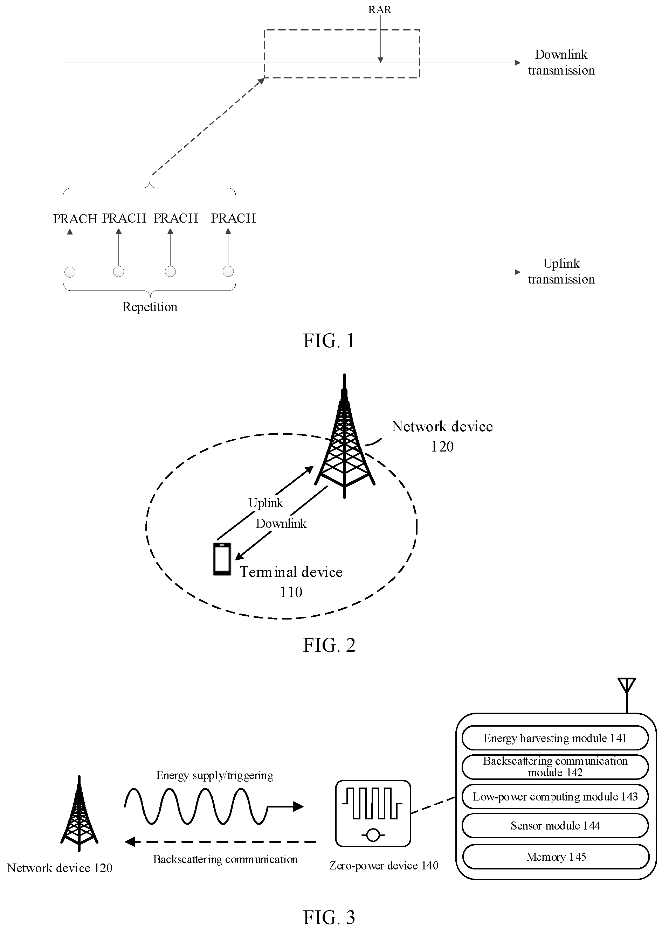

In the random access procedure, after transmitting a PRACH, the terminal device receives the RAR from the network device within the RAR reception window. When no RAR is received, the terminal device retransmits the PRACH (re-transmission) on the next available PRACH resource and ramps up the power of the PRACH by one step. However, in the case of limited coverage, the terminal device cannot infinitely increase the power of the PRACH to make it detectable by the network device. To improve the coverage performance of PRACH, repetition of PRACH is introduced in Release 18 (R18) standard. As shown in FIG. 1, repetition of PRACH corresponds to the same RAR reception window, and the network can perform combined reception on the repetition of PRACH to improve detection performance, thereby enhancing the coverage of PRACH.

**·Power control of PRACH:**

The power control of PRACH adopts an open-loop power control mechanism. The terminal device sets a transmit power of PRACH based on factors such as an expected received power configured by the network device and a path loss measured from the downlink reference signal. During the random access procedure, if the terminal device transmits a PRACH but does not receive a RAR from the network device or fails to receive the contention resolution message, the terminal device needs to retransmit the PRACH. When the terminal device under NR technology supports multiple transmit beams, the transmit beam remains unchanged, and the transmit power of the retransmitted PRACH is ramped up based on the power of the previously transmitted PRACH until the random access procedure is successfully completed.

The power of PRACH is determined by the following formula: $P_{PRACH,f,c}(i) = \min\{P_{CMAX,f,c}(i), P_{PRACH,target,f,c} + PL_{b,f,c}\}$[dBm].

$P_{PRACH,target,f,c}$ represents the target received power (PREAMBLE_RECEIVED_TARGET_POWER) of the PRACH determined by the medium access control (MAC) layer, $PL_{b,f,c}$ represents the path loss, and $P_{CMAX,f,c}(i)$ represents the maximum output power of the terminal device at the $i^{th}$ transmission occasion.

PREAMBLE_RECEIVED_TARGET_POWER = preambleReceivedTargetPower + DELTA_PREAMBLE + (PREAMBLE_POWER_RAMPING_COUNTER - 1) × PREAMBLE_POWER_RAMPING_STEP + POWER_OFFSET_2STEP_RA.

preambleReceivedTargetPower represents the target received power for the PRACH configured by the higher layer.

FIG. 2 illustrates a schematic diagram of a communication system according to some exemplary embodiments of the present disclosure. The communication system includes a terminal device 110 and a network device 120.

The terminal device 110 in the present disclosure can also be referred to as a user equipment (UE), an access terminal, a subscriber unit, a subscriber station, a mobile station, a remote station, a remote terminal, a mobile device, a user terminal, a terminal, a wireless communication device, a user agent, or a user apparatus. The terminal device includes but is not limited to: a handheld device, a wearable device, a vehicle-mounted device, and an Internet of things (IoT) device, such as a mobile phone, a tablet computer, an e-book reader, a laptop computer, a desktop computer, a television, a game console, a mobile Internet device (MID), an augmented reality (AR) terminal, a virtual reality (VR) terminal, a mixed reality (MR) terminal, a wearable device, a handle, an electronic tag, a controller, a wireless terminal in industrial control, a wireless terminal in self-driving, a wireless terminal in remote medical technology, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), or a customer premise equipment (CPE).

The network device 120 in the present disclosure provides wireless communication functions, and includes but is not limited to: an evolved Node B (eNB), a radio network controller (RNC), a Node B (NB), a base station controller (BSC), a base transceiver station (BTS), a home base station (such as a home eNB or a home NB (HNB)), a baseband unit (BBU), an access point (AP) in a wireless fidelity (Wi-Fi) system, a wireless relay node, a wireless backhaul node, a transmission point (TP), or a transmission and reception point (TRP), etc. It can also be the next generation Node B (gNB) or a transmission point (TRP or TP) in the 5th generation (5G) mobile communication system, or one or a group of antenna panels (including multiple antenna panels) of a base station in the 5G system, or a network node constituting the gNB or TP, such as a baseband unit (BBU) or a distributed unit (DU), etc., or a base station in the beyond 5G (B5G) mobile communication system, 6th generation (6G) mobile communication system, or a core network (CN), a fronthaul, a backhaul, a radio access network (RAN), a network slice, etc., or a serving cell, a primary cell (PCell), a primary secondary cell (PSCell), a special cell (SpCell), a secondary cell (SCell), a neighbor cell of a terminal device, etc.

The terminal device 110 and the network device 120 communicate with each other via an air interface technology, such as a Uu interface. Illustratively, there are two communication scenarios between the terminal device 110 and the network device 120: an uplink communication scenario and a downlink communication scenario. Uplink communication refers to the terminal device 110 transmitting signals to the network device 120, and downlink communication refers to the network device 120 transmitting signals to the terminal device 110.

The technical solutions provided in the embodiments of the present disclosure can be applied to various communication systems, such as the a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, a LTE time division duplex (TDD) system, an advanced LTE (LTE-A) system, a universal mobile telecommunication system (UMTS), a worldwide interoperability for microwave access (WiMAX) communication system, a 5G mobile communication system, an NR system, an evolved system of the NR system, an LTE-based access to unlicensed spectrum (LTE-U) system, an NR-based access to unlicensed spectrum (NR-U) system, a terrestrial networks (TN) system, a non-terrestrial networks (NTN) system, a wireless local area networks (WLAN), a wireless fidelity (Wi-Fi), a cellular IoT system, a cellular passive IoT system, and can also be applied to a subsequent evolved systems of the 5G NR system, as well as to B5G, 6G, and subsequent evolved systems.

In some embodiments of the present disclosure, "NR" may also be referred to as a 5G NR system or a 5G system. The 5G mobile communication system may include a non-standalone (NSA) and/or a standalone (SA) networking. The technical solutions provided in the embodiments of the present disclosure may also be applied to machine type communications (MTC), LTE-machine (LTE-M), device to device (D2D) networks, machine to machine (M2M) networks, IoT networks, or other networks. The IoT network may include, for example, the Internet of vehicles (IoV). The communication modes in the IoV system are collectively referred to as Vehicle to X (V2X, where X can represent anything). For example, the V2X communications may include vehicle to vehicle (V2V) communications, vehicle to infrastructure (V2I) communications, vehicle to pedestrian (V2P) communications, or vehicle to network (V2N) communications.

The terminal device 110 involved in the embodiments of the present disclosure is specifically a passive device. A

passive device refers to a device that does not require power supply or can operate by receiving energy from other devices, and can be referred to as a zero-power device, zero-power terminal, low-power device, low-power terminal, etc. The passive device can also be a device that obtains energy from the environment, which can be referred to as an ambient energy IoT device. The passive device can also be a device deployed at a fixed location, which can be referred to as a zero-power station, low-power station, etc. The passive device can be a terminal with a low power wake-up receiver (LP-WUR) in a cellular system, or a STA with a WUR in a Wi-Fi system.

Illustratively, as shown in FIG. 3, the network device 120 is used to transmit a wireless energy supply signal and a downlink communication signal to the zero-power device 140 and receive a backscattering signal from the zero-power device 140. The zero-power device 140 is also referred to as an ambient IoT device or an ambient power (AMP) device. The zero-power device 140 includes an energy harvesting module 141, a backscattering communication module 142, and a low-power computing module 143. The energy harvesting module 141 may harvest energy carried by radio waves in space for driving the low-power computing module 143 of the zero-power device 140 and implement backscattering communication. Upon acquiring the energy, the zero-power device 140 may receive control signaling from the network device 120 and transmit data to the network device 120 by backscattering based on the control signaling. The transmitted data may be from data stored in the zero-power device 140 (e.g., identity or pre-written information, such as production date, brand, and manufacturer). The zero-power device 140 may further include a sensor module 144 and a memory 145. The sensor module 144 may include various sensors. The zero-power device 140 may report, based on a zero-power mechanism, data collected by the various sensors. The memory 145 is used to store some basic information (such as item identifiers) or acquire sensing data, such as ambient temperature and ambient humidity. The zero-power device 140 does not need any battery, and simple signal demodulation, decoding or coding, modulation, and other simple operations may be implemented using the low-power computing module 143. Therefore, a zero-power module only requires a simple hardware design, thereby lowering the cost and reducing the size of the zero-power device 140.

The network device 120 includes, but is not limited to, a cellular network device such as a 5G/6G network device and a base station device, and a Wi-Fi/WLAN network device such as an AP, a router, and a mobile AP. The mobile AP may be a phone.

The zero-power device 140 includes, but is not limited to, a handheld device, a wearable device, an in-vehicle device, an IoT device, or the like. The zero-power device 140 may be at least one of a phone, a tablet computer, an e-book reader, a laptop computer, a desktop computer, a television, a game console, an AR terminal, a VR terminal, a mixed reality (MR) terminal, a wearable device, a handle, an electronic tag, a controller, or the like.

Next, the classification of zero-power devices is introduced.

Based on energy sources and usage modes of the zero-power devices, the zero-power devices may be classified into the following types.

- Passive zero-power device. The zero-power device does not need a built-in battery. In a case where the zero-power device is close to a network device, the zero-power device is within a near field range formed by antenna radiation of the network device. In some embodiments, the network device is a reader/writer of the RFID system. Therefore, an antenna of the zero-power device generates an induced current by electromagnetic induction, and the induced current drives a low-power chip circuit of the zero-power device. Demodulation of a forward link signal and modulation of a backward link signal are implemented. For a backscattering link, the zero-power device carries out signal transmission by backscattering or ultra-low-power active transmission. The passive zero-power device does not need a built-in battery to drive either for the forward link or a reverse link, and is a true zero-power device. The passive zero-power device does not need any battery, in which an RF circuit and a baseband circuit are very simple. For example, the passive zero-power device does not need devices such as an LNA, a PA, a crystal oscillator, and an analog-to-digital converter (ADC), and has many advantages such as small size, light weight, very low price, and long service life.
- Semi-passive zero-power device. The semi-passive zero-power device is not provided with any conventional battery, and may harvest radio wave energy by a radio frequency (RF) energy harvesting module, and at the same time, store the harvested energy in an energy storage unit. In some embodiments, the energy storage unit is a capacitor. Upon acquiring the energy, the energy storage unit may drive a low-power chip circuit of the zero-power device. Demodulation of a forward link signal and modulation of a backward link signal are implemented. For a backscattering link, the zero-power device carries out signal transmission by backscattering or ultra-low-power active transmission.

The semi-passive zero-power device does not need any built-in battery to drive either for the forward link or a reverse link, and in operation, uses energy stored in the capacitor that is from radio energy harvested by the RF energy harvesting module, which is a true zero-power device. The semi-passive zero-power device inherits many advantages of the passive zero-power device, such as small size, light weight, very low price, and long service life.

- Active zero-power device. The zero-power device used in some scenarios is an active zero-power device. The active zero-power device may be provided with a built-in battery. The battery is configured to drive a low-power chip circuit of

the zero-power device. Demodulation of a forward link signal and modulation of a backward link signal are implemented. However, for a backscattering link, the zero-power device carries out signal transmission by back-scattering or ultra-low-power active transmission. Therefore, zero power of the active zero-power device is mainly reflected in the fact that signal transmission in the reverse link does not consume the power of the zero-power device itself but uses backscattering. In the active zero-power device, the built-in battery supplies power to an RFID chip, and thus a reading/writing distance of a tag is increased and reliability of communication is improved. Therefore, the active zero-power device is applicable to some scenarios where relatively high requirements are put forward for a communication distance and a read latency.

Next, the classification of zero-power devices is introduced based on the type of transmitter.

(1) Zero-power device based on backscattering

This type of zero-power device carries out uplink data transmission by backscattering as described above. This type of zero-power device does not have an active transmitter for active transmission, but only has a transmitter for backscattering. Therefore, when carrying out uplink data transmission, this type of zero-power device needs a network device to provide a carrier, and implement backscattering based on the carrier to implement uplink data transmission.

(2) Zero-power device based on an active transmitter

This type of zero-power device has an active transmitter with an active transmission capability for uplink data transmission. Therefore, when carrying out uplink data transmission, this type of zero-power device can transmit uplink data using its own active transmitter, and does not need a network device to provide carrier wave. An active transmitter applicable to a zero-power device may be an ultra-low-power amplitude shift keying (ASK) transmitter, an ultra-low-power frequency shift keying (FSK) transmitter, or the like. Based on current implementations, the overall power consumption of such transmitters can be reduced to 400 microwatts to 600 microwatts in a case where a 100-microwatt signal is transmitted.

(3) Zero-power device based on both backscattering and an active transmitter

This type of zero-power device supports both backscattering and an active transmitter. The zero-power device determines whether to perform backscattering or perform active transmission using an active transmitter based on different situations (such as different power levels and different available ambient energy sources) or based on the scheduling of a network device.

Next, cellular IoT is introduced.

The cellular IoT is booming. For example, IoT technologies, such as narrow band-IoT (NB-IoT), MTC, and RedCap, have been standardized in the 3$^{rd}$ Generation Partnership Project (3GPP). However, the IoT communication requirements cannot be met yet in many scenarios, for example:

- Harsh communication environment. In some IoT scenarios, extreme environments such as high temperature, extremely low temperature, high humidity, high voltage, high radiation, or highspeed movement may occur. Such scenarios include ultra-high voltage transformer substations, highspeed train track monitoring, environmental monitoring in extremely cold regions, industrial production lines, and the like. In these scenarios, existing IoT terminal devices cannot operate due to the operating environment restrictions of conventional power supplies. In addition, extreme operating environments are not conducive to the maintenance of IoT terminal devices, e.g., battery replacement.
- Requirements for ultra-small form factor of terminals. In some IoT communication scenarios, such as food traceability, commodity circulation, and smart wearables, a terminal needs to have an ultra-small size for convenient use in these scenarios. For example, an IoT terminal device used for commodity management in a circulation process is usually in the form of an electronic tag, and the IoT terminal device is embedded in commodity packaging in a very compact form. For another example, a lightweight wearable IoT terminal device improves user experience while meeting user needs.
- Requirements for ultra-low-cost IoT communication. In numerous IoT communication scenarios, an IoT terminal device needs to have sufficiently low cost so as to enhance its competitiveness relative to other alternative techniques. For example, in logistics or warehousing scenarios, to facilitate the management of a large volume of items in circulation, an IoT terminal device is attached to each item, thereby achieving precise management of the entire logistics process and lifecycle by means of the communication between the IoT terminal device and a logistics network. In these scenarios, the IoT terminal device needs to have a very competitive price.

Therefore, to meet these IoT communication needs that have not been met yet, an IoT that has ultra-low cost and an ultra-small size and is battery-free/maintenance-free needs to be developed in the cellular IoT, and the zero-power IoT can perfectly meet these needs. A zero-power IoT is also referred to as an ambient IoT or a passive IoT. The ambient IoT device uses various environmental energies such as RF energy, optical energy, solar energy, thermal energy, and mechanical energy to drive the ambient IoT device itself. The ambient IoT device may have no energy storage capability or only have a very limited energy storage capability (e.g., using a capacitor with a capacity of tens of microfarads). Compared with an existing IoT device, the ambient IoT device has many advantages, for example, the ambient IoT is conventional battery-free, maintenance-free, small in size, low in complexity, low in cost, and has a long service life.

Ambient IoT devices (ambient energy-based IoT devices): In NR systems and Wi-Fi systems, the battery-free and low-cost features of devices can support the low-cost and large-scale deployment of IoT devices without maintenance. Current standards are exploring how to support ambient energy-based IoT devices, known as ambient IoT devices or AMP IoT devices, in NR systems and Wi-Fi systems. The energy required for their operation comes from ambient energy harvesting, which can be sourced from wireless signals, solar energy, thermal energy, etc. These devices are similar to passive or semi-passive devices in zero-power communication.

In 3GPP RAN, a study item on Ambient IoT devices has been initiated, and Ambient IoT devices are categorized into three main types: Device A, Device B, and Device C, each possessing varying levels of complexity and communication capabilities.

- ·Device A: It does not have energy storage capability and cannot transmit independent signals, thus it adopts the backscattering transmission method.
- ·Device B: It possesses energy storage capability but cannot transmit independent signals. Specifically, it employs a backscattering transmission method that utilizes stored energy to amplify the backscatter signal.
- ·Device C: It possesses energy storage capability and is capable of transmitting independent signals, indicating its active transmission capability.

Device A has the lowest complexity and power consumption, with power consumption as low as 1 μW, but its communication distance is limited, generally only a few meters. Device A requires network devices to provide carrier signals for backscattering transmission. Device C generally has a large-capacity capacitor to store energy from the environment, with power consumption capable of supporting hundreds of μW, and can support active signal transmission with a large communication distance. Since Device C can perform active transmission, it does not require network devices to provide carrier signals. Device B has a complexity and power consumption between Device A and Device C.

In addition, the ambient energy harvesting supported by zero-power terminals can also come in various types, such as wireless radio frequency, solar energy, thermal energy, mechanical energy, and other forms of energy. Zero-power terminals based on wireless radio frequency energy harvesting may require the network to provide RF energy supply signals.

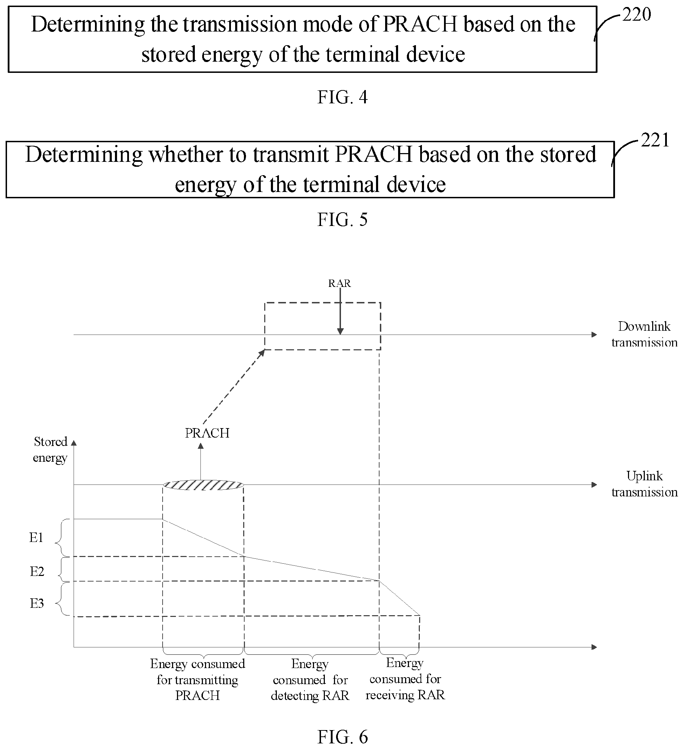

In some embodiments, the above terminal devices may be active devices, which refer to devices with their own power supply and the capability to actively generate and transmit signals, such as mobile phones, computers, smartwatches, smart bracelets, etc. In the case where the terminal device is an active device, the terminal device primarily relies on battery power during the random access procedure. That is, the terminal device does not need to consider the energy source when transmitting PRACH, and only needs to limit the maximum transmit power for PRACH transmission. In the related art, cellular networks support the access of zero-power devices. Since the energy of zero-power devices comes from the environment and zero-power devices have limited energy storage capacity, PRACH transmission failure may occur during the random access procedure. To solve the above problem, some embodiments of the present disclosure propose a channel transmission method. FIG. 4 illustrates a flowchart of the channel transmission method according to some exemplary embodiments of the present disclosure. This method is performed by the terminal device and includes the following step:

**Step 220:** determining, based on the stored energy of the terminal device, the transmission mode of PRACH.

The terminal device in the embodiments of the present disclosure may refer to a passive terminal device, which can also be referred to as a zero-power device. In some embodiments, the terminal device is powered by harvesting ambient energy. Optionally, the terminal device is equipped with an energy harvesting module, which is used to harvest ambient energy. As an example, as shown in FIG. 3, the energy harvesting module 141 can harvest energy carried by radio waves (wireless signals) in space, which is used to drive the low-power computing module 143 of the zero-power device 140 and implement backscattering communication. Taking RF energy harvesting as an example of energy harvesting method, the terminal device collects radio waves through the RF energy harvesting module, thereby obtaining radio energy and storing it in the energy storage unit. After obtaining sufficient energy, the energy storage unit can drive the low-power circuit to work for signal demodulation in the forward link and signal modulation, transmission, and other operations in the reverse link. In some embodiments, the energy harvested by the terminal device is greater than or equal to the stored energy. Since energy loss cannot be avoided, the energy stored in the terminal device may be less than the energy

harvested by the terminal device.

In some embodiments, the stored energy of the terminal device is calculated or detected to determine the amount of stored energy of the terminal device.

In some embodiments, determining the transmission mode of PRACH based on the stored energy of the terminal device includes at least one of the following:

**Mode 1:** determining whether to transmit PRACH based on the stored energy of the terminal device. This includes: determining to transmit PRACH based on the stored energy of the terminal device; or determining not to transmit PRACH based on the stored energy of the terminal device.

**Mode 2:** determining the transmission resource for PRACH based on the stored energy of the terminal device. Alternatively, in the case of determining to transmit PRACH, determining the transmission resource for transmitting PRACH based on the stored energy of the terminal device.

**Mode 3:** determining the transmit power of PRACH based on the stored energy of the terminal device. Alternatively, in the case of determining to transmit PRACH, determining the transmit power for transmitting PRACH based on the stored energy of the terminal device.

**Mode 4:** determining the maximum number of attempts for PRACH based on the stored energy of the terminal device. Alternatively, in the case of determining to transmit PRACH, determining the maximum number of attempts for transmitting PRACH based on the stored energy of the terminal device.

In summary, in the method according to the embodiments, the transmission mode of PRACH is determined based on the stored energy of the terminal device, enabling the terminal device to determine a transmission mode that matches its current stored energy from a plurality of different transmission modes based on its own stored energy. This effectively reduces PRACH transmission failures caused by insufficient stored energy of the terminal device and minimizes energy waste resulting from unnecessary PRACH transmission attempts by the terminal device.

**<u>For mode 1 (whether to transmit):</u>**

FIG. 5 illustrates a flowchart of a channel transmission method according to some exemplary embodiments of the present disclosure. This embodiment is exemplified by the method being performed by a terminal device. The above step 220 can be replaced with the following sub-step:

**Step 221:** determining, based on the stored energy of the terminal device, whether to transmit PRACH.

In some embodiments, when a terminal device needs to transmit PRACH, the terminal device calculates whether the stored energy of the terminal device meets the energy required for transmitting PRACH. In the case where the stored energy of the terminal device meets the energy required for transmitting PRACH, the terminal device determines to transmit PRACH; and/or in the case where the stored energy of the terminal device does not meet the energy required for transmitting PRACH, the terminal device determines not to transmit PRACH.

<u>For the case of transmitting PRACH:</u>

In some embodiments, determining, based on the stored energy of the terminal device, to transmit PRACH.

Optionally, in the case where the stored energy of the terminal device meets the energy requirement for transmitting PRACH, determining to transmit PRACH. For example, as shown in FIG. 6, the energy required to be consumed by the terminal device for transmitting PRACH is E1. Therefore, when the stored energy of the terminal device is greater than or equal to E1, determining to transmit PRACH. In the method according to the embodiments, based on the stored energy of the terminal device, determining to transmit PRACH when the stored energy of the terminal device is sufficient, thereby ensuring the success rate of transmitting PRACH.

Optionally, in the case where the stored energy of the terminal device meets a first sum value, determining to transmit PRACH. The first sum value is the sum of the energy requirement for transmitting PRACH and the energy requirement for detecting RAR. Illustratively, as shown in FIG. 6, the energy required to be consumed by the terminal device for transmitting PRACH is E1, and the energy required to be consumed for detecting RAR is E2. Therefore, when the stored energy of the terminal device is greater than or equal to the sum of E1 and E2, determining to transmit PRACH. In the method according to the embodiments, based on the stored energy of the terminal device, determining to transmit PRACH when the stored energy of the terminal device can simultaneously meet the energy requirement for transmitting PRACH and the energy requirement for detecting RAR, thereby ensuring that the terminal device has sufficient stored energy to transmit PRACH and detect RAR.

Optionally, in the case where the stored energy of the terminal device meets a second sum value, determining to transmit PRACH. The second sum value is the sum of the energy requirement for transmitting PRACH, the energy requirement for detecting RAR, and the energy requirement for receiving RAR. Illustratively, as shown in FIG. 6, the energy

required to be consumed by the terminal device for transmitting PRACH is E1, the energy required to be consumed for detecting RAR is E2, and the energy required to be consumed for receiving RAR is E3. Therefore, when the stored energy of the terminal device is greater than or equal to the sum of E1, E2, and E3, determining to transmit PRACH. In the method according to the embodiments, based on the stored energy of the terminal device, determining to transmit PRACH when the stored energy of the terminal device can simultaneously meet the energy requirement for transmitting PRACH, the energy requirement for detecting RAR, and the energy requirement for receiving RAR, thereby ensuring that the terminal device has sufficient stored energy to transmit PRACH, detect RAR, and receive RAR.

For the case of not transmitting PRACH

In some embodiments, based on the stored energy of the terminal device, determining not to transmit PRACH.

Optionally, in the case where the stored energy of the terminal device does not meet the energy requirement for transmitting PRACH, determining not to transmit PRACH, to wait for the next PRACH transmission occasion, and to repeatedly determine whether the stored energy of the terminal device meets the energy requirement for transmitting PRACH. Illustratively, as shown in FIG. 6, the energy required to be consumed by the terminal device for transmitting PRACH is E1. Therefore, when the stored energy of the terminal device is less than E1, determining not to transmit PRACH. In the method according to the embodiments, based on the stored energy of the terminal device, determining not to transmit PRACH when the stored energy of the terminal device is insufficient. This can avoid energy waste caused by unnecessary PRACH transmission attempts by the terminal device when the stored energy is insufficient.

Optionally, in the case where the stored energy of the terminal device does not meet the first sum value, determining not to transmit PRACH, to wait for the next PRACH transmission occasion, and to repeatedly determine whether the stored energy of the terminal device meets the first sum value. The first sum is the sum of the energy requirement for transmitting PRACH and the energy requirement for detecting RAR. Illustratively, as shown in FIG. 6, the energy required to be consumed by the terminal device for transmitting PRACH is E1 and the energy required to be consumed for detecting RAR is E2, determining not to transmit PRACH when the stored energy of the terminal device is less than the sum of E1 and E2. In the method according to the embodiments, based on the stored energy of the terminal device, determining not to transmit PRACH when the stored energy of the terminal device cannot simultaneously meet the energy requirement for transmitting PRACH and the energy requirement for detecting RAR, thereby avoiding situations where the terminal device does not have sufficient energy to detect RAR after transmitting PRACH, or where the terminal device cannot meet the energy requirement for transmitting PRACH when its stored energy meets the energy requirement for detecting RAR. This can further reduce the possibility of energy waste.

Optionally, in the case where the stored energy of the terminal device does not meet the second sum value, determining not to transmit PRACH, to wait for the next PRACH transmission occasion, and to repeatedly determine whether the stored energy of the terminal device meets the second sum value. The second sum value is the sum of the energy requirement for transmitting PRACH, the energy requirement for detecting RAR, and the energy requirement for receiving RAR. Illustratively, as shown in FIG. 6, the energy required to be consumed by the terminal device for transmitting PRACH is E1, the energy required to be consumed for detecting RAR is E2, and the energy required to be consumed for receiving RAR is E3, determining not to transmit PRACH when the stored energy of the terminal device is less than the sum of E1, E2, and E3. In the method according to the embodiments, based on the stored energy of the terminal device, determining not to transmit PRACH when the stored energy of the terminal device cannot simultaneously meet the energy requirement for transmitting PRACH, the energy requirement for detecting RAR, and the energy requirement for receiving RAR, thereby avoiding erroneous attempts by the terminal device and further reducing the possibility of energy waste.

In some embodiments, the energy requirement for transmitting PRACH include any of the following:

**The first type:** energy requirement for a single transmission of PRACH.

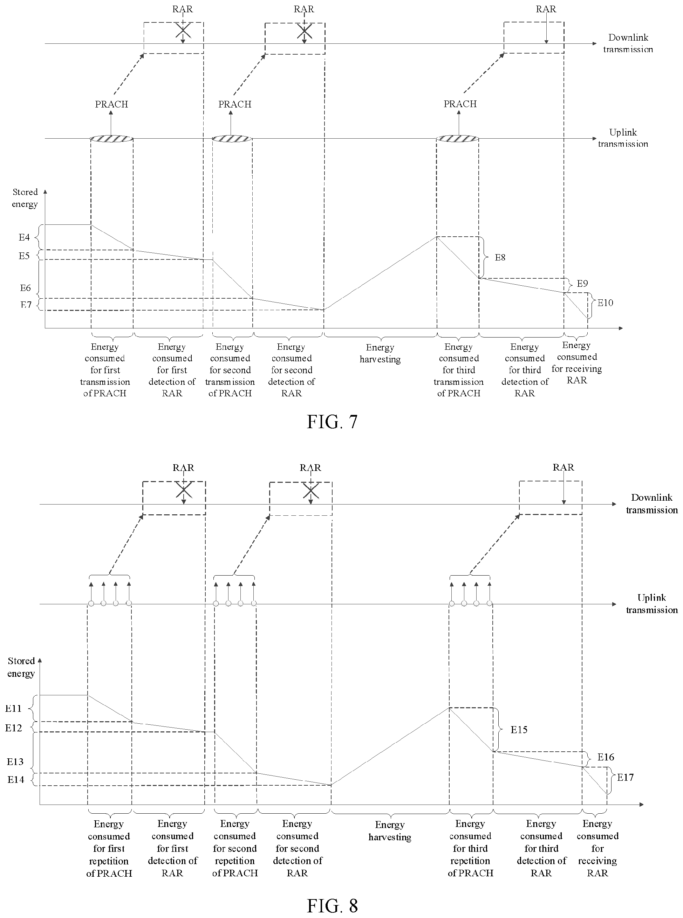

In some embodiments, when the stored energy of the terminal device meets the energy requirement for a single transmission of PRACH, determining to transmit PRACH. Illustratively, as shown in FIG. 7, the energy required to be consumed by the terminal device for the first transmission of PRACH is E4. Therefore, when the stored energy of the terminal device is greater than or equal to E4, determining to transmit PRACH. The energy required to be consumed by the terminal device for the second transmission of PRACH is E6. Therefore, when the stored energy of the terminal device is greater than or equal to E6, determining to transmit PRACH.

Optionally, when the stored energy of the terminal device meets the energy requirement for a single transmission of PRACH and also meets the energy requirement for detecting RAR, determining to transmit PRACH. As an example, as shown in FIG. 7, the energy required to be consumed by the terminal device for the first transmission of PRACH is E4, and the energy required to be consumed for the first detection of RAR is E5. Therefore, when the stored energy of the terminal device is greater than or equal to the sum of E4 and E5, determining to transmit PRACH. The energy required to be consumed by the terminal device for the second transmission of PRACH is E6, and the energy required to be consumed for the second detection of RAR is E7. Therefore, when the stored energy of the terminal device is greater than or equal to the sum of E6 and E7, determining to transmit PRACH.

Optionally, when the stored energy of the terminal device meets the energy requirement for a single transmission of PRACH, the energy requirement for detecting RAR, and the energy requirement for receiving RAR, determining to transmit PRACH. Illustratively, as shown in FIG. 7, the terminal device receives RAR during its third transmission of PRACH. The energy required to be consumed during the third transmission of PRACH by the terminal device is E8, the energy required to be consumed during the third detection of RAR is E9, and the energy required to be consumed for receiving RAR is E10. Therefore, when the stored energy of the terminal device is greater than or equal to the sum of E8, E9, and E10, determining to transmit PRACH.

In some embodiments, in the case where the stored energy of the terminal device does not meet the energy requirement for a single transmission of PRACH, determining not to transmit PRACH, to wait for the next PRACH transmission occasion, and to repeatedly determine whether the stored energy of the terminal device meets the energy requirement for a single transmission of PRACH. Optionally, in the case where the stored energy of the terminal device does not meet the sum of the energy requirement for a single transmission of PRACH and the energy requirement for detecting RAR, determining not to transmit PRACH, to wait for the next PRACH transmission occasion, and to repeatedly determine whether the stored energy of the terminal device meets the sum of the energy requirement for a single transmission of PRACH and the energy requirement for detecting RAR. Optionally, in the case where the stored energy of the terminal device does not meet the sum of the energy requirement for a single transmission of PRACH, the energy requirement for detecting RAR, and the energy requirement for receiving RAR, determining not to transmit PRACH, to wait for the next PRACH transmission occasion, and to repeatedly determine whether the stored energy of the terminal device meets the sum of the energy requirement for a single transmission of PRACH, the energy requirement for detecting RAR, and the energy requirement for receiving RAR.

It should be understood that the above process is based on each time a terminal device transmits PRACH. After transmitting PRACH for the $x^{th}$ time, the terminal device calculates whether the remaining stored energy of the terminal device meets the energy requirement for transmitting PRACH for the $(x+1)^{th}$ time. If the energy requirement for transmitting PRACH for the $(x+1)^{th}$ time is met, the terminal device transmits PRACH. If the energy requirement for transmitting PRACH for the $(x+1)^{th}$ time is not met, energy harvesting is performed to ensure that the stored energy at least meets the energy requirement for transmitting PRACH for the $(x+1)^{th}$ time. The x is a positive integer. In the method according to the embodiments, whether to transmit PRACH is determined by determining whether the stored energy of the terminal device meets the energy requirement for a single transmission of PRACH, enabling the terminal device to reasonably determine whether to transmit PRACH based on its own stored energy, thereby effectively avoiding the waste of energy in attempting to transmit PRACH when the stored energy of the terminal device is insufficient.

**The second type:** energy requirement for repetition of PRACH.

In some embodiments, in the case where the stored energy of the terminal device meets the energy requirement for repetition of PRACH, determining to transmit PRACH. Optionally, in the case where the stored energy of the terminal device meets the energy requirement for n repetitions of PRACH, determining to transmit PRACH, where n is a positive integer. Optionally, n is preset. Illustratively, as shown in FIG. 8, assuming n=4, the energy required to be consumed by the terminal device for the first repetition of PRACH is E11. Therefore, when the stored energy of the terminal device is greater than or equal to E11, determining to transmit PRACH. The energy required to be consumed by the terminal device for the second repetition of PRACH is E13. Therefore, when the stored energy of the terminal device is greater than or equal to E136, determining to transmit PRACH.

Optionally, in the case where the stored energy of the terminal device meets the energy requirement for repetition of PRACH and also meets the energy requirement for detecting RAR, determining to transmit PRACH. Optionally, when the stored energy of the terminal device meets the energy requirement for n repetitions of PRACH and also meets the energy requirement for detecting RAR during the repetitions, determining to transmit PRACH. In some embodiments, for the repetitions, RAR can be detected only once, multiple times, or n times, which is not limited in the embodiments of the present disclosure. In the embodiments of the present disclosure, detecting RAR once is taken as an example for illustration. Illustratively, as shown in FIG. 8, assuming n=4, the energy required to be consumed by the terminal device for the first repetition of PRACH is E11, and the energy required to be consumed for detecting RAR during the first repetition is E12. Then, when the stored energy of the terminal device is greater than or equal to the sum of E11 and E12, determining to transmit PRACH. The energy required to be consumed by the terminal device for the second repetition of PRACH is E13, and the energy required to be consumed for detecting RAR during the second repetition is E14. Then, when the stored energy of the terminal device is greater than or equal to the sum of E13 and E14, determining to transmit PRACH.

Optionally, in the case where the stored energy of the terminal device meets the energy requirement for repetition of PRACH, the energy requirement for detecting RAR, and the energy requirement for receiving RAR, determining to transmit PRACH. Optionally, in the case where the stored energy of the terminal device meets the energy requirement for n repetitions of PRACH, the energy requirement for detecting RAR, and the energy requirement for receiving RAR, determining to transmit PRACH. Illustratively, as shown in FIG. 8, assuming n=4, the terminal device receives RAR during the third repetition of PRACH. The energy required to be consumed by the terminal device during the third repetition of PRACH is E15, the energy required to be consumed for the third detection of RAR is E16, and the energy required to be

consumed for receiving RAR is E17. Therefore, when the stored energy of the terminal device is greater than or equal to the sum of E15, E16, and E17, determining to transmit PRACH.

In some embodiments, in the case where the stored energy of the terminal device does not meet the energy requirement for repetition of PRACH, determining not to transmit PRACH, to wait for the next PRACH transmission occasion, and to repeatedly determine whether the stored energy of the terminal device meets the energy requirement for repetition of PRACH. Optionally, in the case where the stored energy of the terminal device does not meet the sum of the energy requirement for repetition of PRACH and the energy requirement for detecting RAR, determining not to transmit PRACH, to wait for the next PRACH transmission occasion, and to repeatedly determine whether the stored energy of the terminal device meets the sum of the energy requirement for repetition of PRACH and the energy requirement for detecting RAR. Optionally, in the case where the stored energy of the terminal device does not meet the sum of the energy requirement for repetition of PRACH, the energy requirement for detecting RAR, and the energy requirement for receiving RAR, determining not to transmit PRACH, to wait for the next PRACH transmission occasion, and to repeatedly determine whether the stored energy of the terminal device meets the sum of the energy requirement for repetition of PRACH, the energy requirement for detecting RAR, and the energy requirement for receiving RAR.

It should be understood that the above process is based on each time a terminal device performs n repetitions of PRACH. After repetition of PRACH for the $y^{th}$ time, the terminal device calculates whether the remaining stored energy of the terminal device meets the energy requirement for repetition of PRACH for the $(y+1)^{th}$ time. In the case where the energy requirement for repetition of PRACH for the $(y+1)^{th}$ time is met, the terminal device transmits PRACH. In the case where the energy requirement for repetition of PRACH for the $(y+1)^{th}$ time is not met, energy harvesting is performed to ensure that the stored energy at least meets the energy requirement for repetition of PRACH for the $(y+1)^{th}$ time. In the method according to the embodiments, whether to transmit PRACH is determined by determining whether the stored energy of the terminal device meets the energy requirement for repetition of PRACH, enabling the terminal device to reasonably determine whether to transmit PRACH based on its own stored energy, thereby effectively avoiding the situation where the terminal device wastes energy attempting to transmit PRACH when its stored energy is insufficient.

In some embodiments, at least two PRACH resources within the PRACH resource set used for repetition of PRACH are not necessarily consecutive in the time domain, and the terminal device can perform energy harvesting between adjacent PRACH resources within the PRACH resource set. Therefore, even if the stored energy of the terminal device is less than the energy requirement for repetition of PRACH, the terminal device can still determine to transmit PRACH. Based on this, the method further includes: determining to transmit PRACH in the case where the stored energy of the terminal device meets the product of the energy requirement for repetition of PRACH and a first proportion.

Optionally, in the case where the stored energy of the terminal device meets the product of the energy requirement for repetition of PRACH and the first proportion, and also meets the energy requirement for detecting RAR, determining to transmit PRACH. Optionally, in the case where the stored energy of the terminal device meets the product of the energy requirement for repetition of PRACH and the first proportion, and also meets the product of the energy requirement for detecting RAR and the second proportion, determining to transmit PRACH.

Optionally, in the case where the stored energy of the terminal device meets the product of the energy requirement for repetition of PRACH and the first proportion, and meets the energy requirement for detecting RAR, and meets the energy requirement for receiving RAR, determining to transmit PRACH. Optionally, in the case where the stored energy of the terminal device meets the product of the energy requirement for repetition of PRACH and the first proportion, and meets the product of the energy requirement for detecting RAR and the second proportion, and meets the energy requirement for receiving RAR, determining to transmit PRACH. Optionally, in the case where the stored energy of the terminal device meets the product of the energy requirement for repetition of PRACH and the first proportion, and meets the energy requirement for detecting RAR, and meets the product of the energy requirement for receiving RAR and the third proportion, determining to transmit PRACH. Optionally, in the case where the stored energy of the terminal device meets the product of the energy requirement for repetition of PRACH and the first proportion, and meets the product of the energy requirement for detecting RAR and the second proportion, and meets the product of the energy requirement for receiving RAR and the third proportion, determining to transmit PRACH.

In some embodiments, in the case where the stored energy of the terminal device does not meet the product of the energy requirement for repetition of PRACH and the first proportion, determining not to transmit PRACH, to wait for the next PRACH transmission occasion, and to repeatedly determine whether the stored energy of the terminal device meets the product of the energy requirement for repetition of PRACH and the first proportion.

Optionally, in the case where the stored energy of the terminal device does not meet the sum of the product of the energy requirement for repetition of PRACH and the first proportion, and the energy requirement for detecting RAR, determining not to transmit PRACH, to wait for the next PRACH transmission occasion, and to repeatedly determine whether the stored energy of the terminal device meets the sum of the product of the energy requirement for repetition of PRACH and the first proportion, and the energy requirement for detecting RAR. Optionally, in the case where the stored energy of the terminal device does not meet the sum of the product of the energy requirement for repetition of PRACH and the first proportion, and the product of the energy requirement for detecting RAR and the second proportion, determining

not to transmit PRACH, to wait for the next PRACH transmission occasion, and to repeatedly determine whether the stored energy of the terminal device meets the sum of the product of the energy requirement for repetition of PRACH and the first proportion, and the product of the energy requirement for detecting RAR and the second proportion. Optionally, in the case where the stored energy of the terminal device does not meet the sum of the product of the energy requirement for repetition of PRACH and the first proportion, the energy requirement for detecting RAR, and the energy requirement for receiving RAR, determining not to transmit PRACH, to wait for the next PRACH transmission occasion, and to repeatedly determine whether the stored energy of the terminal device meets the sum of the product of the energy requirement for repetition of PRACH and the first proportion, the energy requirement for detecting RAR, and the energy requirement for receiving RAR. Optionally, in the case where the stored energy of the terminal device does not meet the sum of the product of the energy requirement for repetition of PRACH and the first proportion, the product of the energy requirement for detecting RAR and the second proportion, and the energy requirement for receiving RAR, determining not to transmit PRACH, to wait for the next PRACH transmission occasion, and to repeatedly determine whether the stored energy of the terminal device meets the sum of the product of the energy requirement for repetition of PRACH and the first proportion, the product of the energy requirement for detecting RAR and the second proportion, and the energy requirement for receiving RAR. Optionally, in the case where the stored energy of the terminal device does not meet the sum of the product of the energy requirement for repetition of PRACH and the first proportion, the product of the energy requirement for detecting RAR and the second proportion, and the product of the energy requirement for receiving RAR and the third proportion, determining not to transmit PRACH, to wait for the next PRACH transmission occasion, and to repeatedly determine whether the stored energy of the terminal device meets the sum of the product of the energy requirement for repetition of PRACH and the first proportion, the product of the energy requirement for detecting RAR and the second proportion, and the product of the energy requirement for receiving RAR and the third proportion. Optionally, in the case where the stored energy of the terminal device does not meet the sum of the product of the energy requirement for repetition of PRACH and the first proportion, the energy requirement for detecting RAR, and the product of the energy requirement for receiving RAR and the third proportion, determining not to transmit PRACH, to wait for the next PRACH transmission occasion, and to repeatedly determine whether the stored energy of the terminal device meets the sum of the product of the energy requirement for repetition of PRACH and the first proportion, the energy requirement for detecting RAR, and the product of the energy requirement for receiving RAR and the third proportion.

In some embodiments, the first proportion is predefined. For example, in the case where it is required that the terminal device determines to transmit PRACH when the stored energy of the terminal device exceeds 80% of the energy requirement for repetition of PRACH, then the first proportion is 80%. In some embodiments, the first proportion is determined based on parameters indicated by the network device. In some embodiments, the first proportion is related to the time interval between adjacent PRACH resources in the PRACH resource set. Optionally, the first proportion is negatively correlated with the time interval between adjacent PRACH resources in the PRACH resource set. The larger the time interval between adjacent PRACH resources in the PRACH resource set, the smaller the first proportion. The smaller the time interval between adjacent PRACH resources in the PRACH resource set, the larger the first proportion. In some embodiments, the second proportion is predefined, or determined based on parameters indicated by the network device. In some embodiments, the second proportion is related to the time interval between adjacent PRACH resources in the PRACH resource set. In some embodiments, the third proportion is predefined, or determined based on parameters indicated by the network device. In some embodiments, the third proportion is related to the time interval between adjacent PRACH resources in the PRACH resource set.

In the method according to the embodiments, whether to transmit PRACH is determined by determining whether the stored energy of the terminal device meets the product of the energy requirement for repetition of PRACH and the first proportion, enabling the terminal device to reasonably determine whether to transmit PRACH based on its own stored energy, thereby effectively avoiding the waste of energy in attempting to transmit PRACH when the stored energy of the terminal device is insufficient. At the same time, in the method according to the embodiments, the impact of repetition of PRACH on whether to transmit PRACH can be dynamically controlled based on the first proportion, which can reduce the waiting time of the terminal device and effectively improve the working efficiency of the terminal device.

In some embodiments, the energy requirement for transmitting PRACH is determined based on the transmit power of the PRACH. Optionally, the transmit power of the PRACH is determined based on at least one of: a target received power; a path loss; or a power offset.

The target received power is configured by the network device. The path loss is obtained by the terminal device measuring the downlink signal. The power offset is configured by the higher layer based on the format of the random access preamble.

**<u>For mode 2 (transmission resource):</u>**

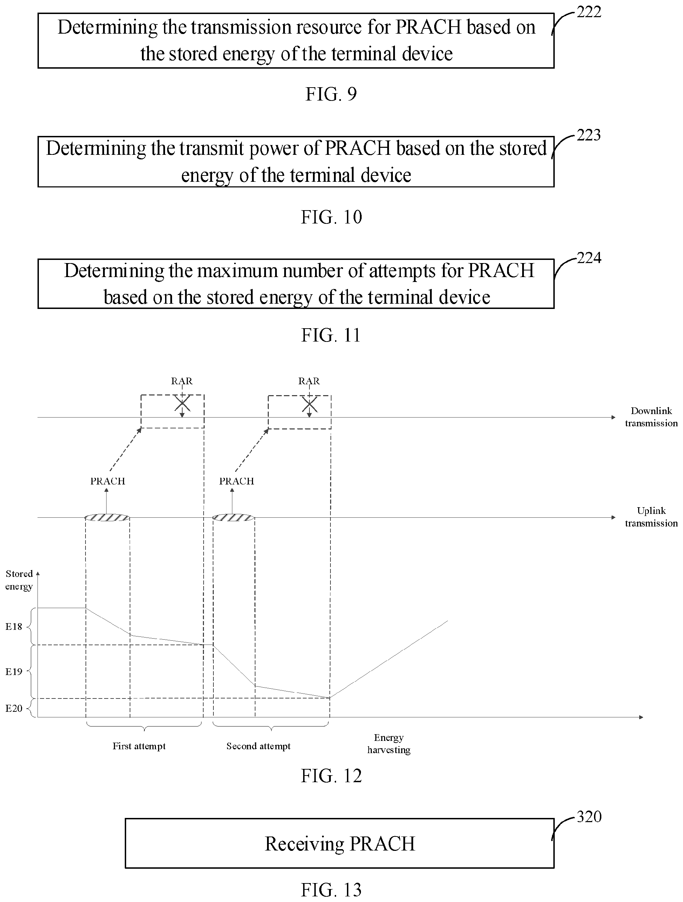

FIG. 9 illustrates a flowchart of a channel transmission method according to some exemplary embodiments of the present disclosure. This method is performed by a terminal device, and the above step 220 can be replaced with the

following sub-step:

**Step 222:** determining, based on the stored energy of the terminal device, the transmission resource for PRACH.

In some embodiments, the PRACH resource to be used this time is selected from at least two PRACH resources based on the stored energy of the terminal device. The PRACH resource to be used this time is for a single transmission of the PRACH. In some embodiments, the PRACH resource set to be used this time is selected from at least two PRACH resource sets based on the stored energy of the terminal device. Each PRACH resource set includes at least two PRACH resources. Optionally, the PRACH resource set to be used this time includes a target PRACH resource, which is for a single transmission of PRACH. Optionally, the PRACH resource set to be used this time includes a target PRACH resource set, which is for repetition of PRACH. The number of PRACH resources in the PRACH resource set to be used this time is greater than or equal to the number of PRACH resources required for repetition of PRACH. That is, the number of PRACH resources in the PRACH resource set to be used this time is greater than or equal to the number of PRACH resources in the target PRACH resource set.

In some embodiments, the configurations of at least two PRACH resources within different PRACH resource sets are different. For example, the time intervals between adjacent PRACH resources in different PRACH resource sets are different. Optionally, the stored energy of the terminal device is negatively correlated with the time interval between adjacent PRACH resources in the PRACH resource set to be used this time. The greater the stored energy of the terminal device, the smaller the time interval between adjacent PRACH resources in the selected PRACH resource set to be used this time. The smaller the stored energy of the terminal device, the larger the time interval between adjacent PRACH resources in the selected PRACH resource set to be used this time.

In some embodiments, in the case where the stored energy of the terminal device is greater than a first threshold, the first PRACH resource set is selected from at least two PRACH resource sets as the PRACH resource set to be used this time. In the case where the stored energy of the terminal device is less than a second threshold, the second PRACH resource set is selected from at least two PRACH resource sets as the PRACH resource set to be used this time. The first threshold is greater than or equal to the second threshold. The time interval between adjacent PRACH resources in the first PRACH resource set is a first time interval, and the time interval between adjacent PRACH resources in the second PRACH resource set is a second time interval, where the first time interval is less than the second time interval.

In some embodiments, in the case where the stored energy of the terminal device is greater than a first threshold, the first PRACH resource set is selected from at least two PRACH resource sets as the PRACH resource set to be used this time. In the case where the stored energy of the terminal device is less than a second threshold, the second PRACH resource set is selected from at least two PRACH resource sets as the PRACH resource set to be used this time. The first threshold is greater than or equal to the second threshold. The first PRACH resource set includes at least two PRACH resource subsets, and the second PRACH resource set includes at least two PRACH resource subsets. The time interval between adjacent PRACH resource subsets in the first PRACH resource set is a first time interval, and the time interval between adjacent PRACH resource subsets in the second PRACH resource set is a second time interval, where the first time interval is less than the second time interval.

In some embodiments, in the case where the stored energy of the terminal device is greater than a first threshold, a first PRACH resource subset is selected from the target PRACH resource set as the PRACH resource set to be used this time. In the case where the stored energy of the terminal device is less than a second threshold, a second PRACH resource subset is selected from the target PRACH resource set as the PRACH resource set to be used this time. The first threshold is greater than or equal to the second threshold. The time interval between adjacent PRACH resources in the first PRACH resource subset is a first time interval, and the time interval between adjacent PRACH resources in the second PRACH resource subset is a second time interval, where the first time interval is less than the second time interval.

In the method according to the embodiments, PRACH transmission resources can be dynamically determined based on the actual energy storage situation of the terminal device by simultaneously considering the stored energy of the terminal device and the configuration of at least two PRACH resources within the PRACH resource set. In the case where the stored energy of the terminal device is relatively high, the terminal device does not need to wait for energy harvesting, and thus a PRACH resource set with smaller time interval between adjacent PRACH resources is selected. Conversely, in the case where the stored energy of the terminal device is relatively low, a PRACH resource set with larger time interval between adjacent PRACH resources is selected, allowing the terminal device to harvest sufficient energy within a longer time interval, thereby effectively improving the operational efficiency of the terminal device.

In some embodiments, the PRACH resource set to be used this time includes a second number of PRACH resources, where the second number is greater than the first number, and the first number represents transmission times for repetition of PRACH. The above method further includes: selecting the first number of PRACH resources from the PRACH resource set to be used this time.

In some embodiments, the stored energy of the terminal device is negatively correlated with the time interval between adjacent PRACH resources within the first number of PRACH resources. The greater the stored energy of the terminal device, the smaller the time interval between adjacent PRACH resources within the selected first number of PRACH resources. The smaller the stored energy of the terminal device, the larger the time interval between adjacent

PRACH resources within the selected first number of PRACH resources. It is worth noting that the time intervals between adjacent PRACH resources may be the same or different. In the embodiments of the present disclosure, the example where the time intervals between adjacent PRACH resources are the same is provided for illustration. Alternatively, in the case where the time intervals between adjacent PRACH resources are different, the stored energy of the terminal device is negatively correlated with the average value of the time intervals between adjacent PRACH resources within the first number of PRACH resources.

In the method according to the embodiments, PRACH resources suitable for the transmission times for repetition of PRACH are selected from the PRACH resource set to be used this time based on the transmission times for repetition of PRACH. The terminal device can use an accurate amount of PRACH resources, avoiding resource waste and facilitating the improvement of the success rate of PRACH transmission by the terminal device.

In some embodiments, different random access preambles exist in the PRACH resource set to be used this time. Different random access preambles are associated with different stored energies. Optionally, there is a one-to-one mapping relationship between different random access preambles and different stored energies. Illustratively, as shown in Table 1 below:

Table 1

| Index of random access preamble | Index of stored energy |
|---|---|
| Random access preamble 1 | Stored energy 1 |
| Random access preamble 2 | Stored energy 2 |
| ...... | ...... |

In some embodiments, different random access preambles correspond to different stored energy ranges. For example, as shown in Table 2 below:

Table 2

| Index of random access preamble | Index of stored energy |
|---|---|
| Random access preamble 1 | Stored energy range 1 |
| Random access preamble 2 | Stored energy range 2 |
| ...... | ...... |

Each stored energy range includes at least two stored energy values. For example, stored energy range 1 includes stored energy values ranging from 1 to 10.

In some embodiments, the above method further includes: selecting a first random access preamble from the PRACH resource set to be used this time. The first random access preamble is associated with stored energy. For example, the current stored energy of the terminal device is stored energy 1, the selected first random access preamble is random access preamble 1.

In the method according to the embodiments, the first random access preamble that matches the current stored energy is selected from multiple random access preambles based on the correlation between different random access preambles and different stored energies, thereby helping to improve the success rate of PRACH transmission by the terminal device through accurate random access preamble.

In some embodiments, different PRACH resources within the PRACH resource set to be used this time belong to distinct PRACH occasions. Each PRACH occasion corresponds to a RAR reception window. The above method further includes: selecting a PRACH resource belonging to the first PRACH occasion from the PRACH resource set to be used this time.

Optionally, the start delay of the RAR reception window corresponding to the first PRACH occasion is associated with the stored energy. This start delay refers to the time from the first moment when the PRACH transmission is completed to the second moment when the RAR starts to be detected. Optionally, the start delay of the RAR reception window corresponding to the first PRACH occasion is negatively correlated with the stored energy. The greater the stored energy of the terminal device, the smaller the start delay of the RAR reception window corresponding to the first PRACH occasion. The smaller the stored energy of the terminal device, the larger the start delay of the RAR reception window corresponding to the first PRACH occasion. That is, when the terminal device has sufficient stored energy, the first PRACH occasion corresponding to the RAR reception window with a smaller start delay is selected. When the terminal device has insufficient stored energy, the first PRACH occasion corresponding to the RAR reception window with a larger start

delay is selected, allowing the terminal device sufficient time for energy harvesting to ensure the next PRACH transmission.

In some embodiments, there exists a one-to-one mapping relationship between the start delay of the RAR reception window corresponding to the first PRACH occasion and the stored energy. For example, as shown in Table 3 below:

Table 3

| Index of start delay | Index of stored energy |
|---|---|
| Start delay 1 | Stored energy 1 |
| Start delay 2 | Stored energy 2 |
| ...... | ...... |

In some embodiments, different start delays correspond to different stored energy ranges. For example, as shown in Table 4 below:

Table 4

| Index of start delay | Index of stored energy |
|---|---|
| Start delay 1 | Stored energy range 1 |
| Start delay 2 | Stored energy range 2 |
| ...... | ...... |

Each stored energy range includes at least two stored energy values. For example, stored energy range 1 includes stored energy values ranging from 1 to 10.

Optionally, the window size of the RAR reception window corresponding to the first PRACH occasion is associated with the stored energy. This window size can also be understood as the time length corresponding to the reception window, which refers to the time length from the start of detecting the RAR to the end of detecting the RAR. Optionally, the window size of the RAR reception window corresponding to the first PRACH occasion is negatively correlated with the stored energy. The greater the stored energy of the terminal device, the smaller the window size of the RAR reception window corresponding to the first PRACH occasion. The smaller the stored energy of the terminal device, the larger the window size of the RAR reception window corresponding to the first PRACH occasion. That is, in the case where the terminal device has sufficient stored energy, the first PRACH occasion corresponding to the RAR reception window with a smaller window size is selected. In the case where the terminal device has insufficient stored energy, the first PRACH occasion corresponding to the RAR reception window with a larger window size is selected, allowing the terminal device sufficient time for energy harvesting to ensure the next PRACH transmission.

In some embodiments, there is a one-to-one mapping relationship between the window size of the RAR reception window corresponding to the first PRACH occasion and the stored energy. For example, as shown in Table 5 below:

Table 5

| Index of window size | Index of stored energy |
|---|---|
| Window size 1 | Stored energy 1 |
| Window size 2 | Stored energy 2 |
| ...... | ...... |

In some embodiments, different window sizes correspond to different stored energy ranges. For example, as shown in Table 6 below:

Table 6

| Index of window size | Index of stored energy |
|---|---|
| Window size 1 | Stored energy range 1 |
| Window size 2 | Stored energy range 2 |

(continued)

| Index of window size | Index of stored energy |
|---|---|
| ...... | ...... |

Each energy storage range includes at least two stored energy values. For example, stored energy range 1 includes stored energy values ranging from 1 to 10.

In the method according to the embodiments, by selecting the PRACH resource for the first PRACH occasion that matches the stored energy of the terminal device, the transmission resource actually used for PRACH can be dynamically determined based on the actual energy storage situation of the terminal device. This not only reduces resource waste caused by incorrect attempts by the terminal device but also helps improve the operational efficiency of the terminal device.

**For mode 3 (transmit power):**

FIG. 10 illustrates a flowchart of a channel transmission method according to some exemplary embodiments of the present disclosure. The method is performed by a terminal device, and the above step 220 can be replaced with the following sub-step:

**Step 223:** determining, based on the stored energy of the terminal device, the transmit power of PRACH.

In some embodiments, determining the transmit power of the PRACH belonging to the $i^{th}$ transmission occasion based on the stored energy of the terminal device. i is a positive integer. Optionally, the transmit power of the PRACH belonging to the $i^{th}$ transmission occasion is the minimum value among: a target transmit power; a power corresponding to the stored energy of the terminal device; and a maximum output power of the terminal device at the $i^{th}$ transmission occasion.

The target transmit power is determined based on at least one of a target received power, a path loss, or a power offset. The target received power is configured by the network device. The path loss is obtained by the terminal device measuring the downlink signal. The power offset is configured by the higher layer according to the format of the random access preamble.

Illustratively, the calculation formula for the target transmit power is: $P_{PRACH,Tx} = P_{PRACH,target} + PL$. $P_{PRACH,target}$ represents the target received power, and PL represents the path loss.

In some embodiments, the maximum output power of the terminal device at the $i^{th}$ transmission occasion depends on the category of the terminal device, and is typically considered to be 23dBm. For example, $P_{CMAX}(i) = 23dBm$.

In some embodiments, the power corresponding to the stored energy of the terminal device is equal to the quotient of the stored energy of the terminal device and the PRACH transmission duration.

Illustratively, the calculation formula for the transmit power of the PRACH belonging to the $i^{th}$ transmission occasion is: $P_{PRACH}(i) = \min\{P_{CMAX}(i), P_S(i) + P_{PRACH,Tx}\}$. $P_{PRACH,Tx}$ represents the target transmit power of the PRACH, $P_S(i)$ represents the power corresponding to the stored energy of the terminal device, and $P_{CMAX}(i)$ represents the maximum output power of the terminal device at the $i^{th}$ transmission occasion.

It should be understood that the above target transmit power and the maximum output power of the terminal device at the $i^{th}$ transmission occasion are fixed powers. Therefore, the transmit power of the PRACH belonging to the $i^{th}$ transmission occasion is actually limited by the power corresponding to the stored energy of the terminal device. When the stored energy of the terminal device is relatively small, it may not be possible to transmit the PRACH at the target transmit power and/or at the maximum output power of the terminal device at the $i^{th}$ transmission occasion. When the stored energy of the terminal device is relatively large, one of the above three options can be arbitrarily selected as the transmit power of the PRACH at the $i^{th}$ transmission occasion. In the method according to the embodiments, the transmit power of the PRACH is determined based on the stored energy of the terminal device, enabling the terminal device to transmit the PRACH at an appropriate transmit power according to its actual energy storage situation, thereby improving the success rate of the terminal device transmitting the PRACH.

**For mode 4 (maximum number of attempts):**

FIG. 11 illustrates a flowchart of a channel transmission method according to some exemplary embodiments of the present disclosure. This method is performed by a terminal device, and the above step 220 can be replaced with the following sub-step:

**Step 224:** determining, based on the stored energy of the terminal device, the maximum number of attempts for PRACH.

In some embodiments, the stored energy of the terminal device can support one or multiple attempts in the random access procedure, and the stored energy of the terminal device is consumed during the attempts. Therefore, although the network device may configure a maximum number of attempts, due to the randomness of the stored energy of

the terminal device, if the stored energy of the terminal device is insufficient to support another attempt, the terminal device needs to terminate further attempts. Consequently, the maximum number of attempts for PRACH is influenced by the stored energy of the terminal device.

In some embodiments, determining the maximum number of attempts for PRACH to be the number of attempts supported by the stored energy of the terminal device. For example, assuming the number of attempts supported by the stored energy of the terminal device is 2, determining the maximum number of attempts for PRACH to be 2. Illustratively, as shown in FIG. 12, assuming the stored energy of the terminal device is the sum of E18, E19, and E20, where E18 represents the energy required for the first attempt, E19 represents the energy required for the second attempt, and E20 is less than the energy required for the third attempt, the terminal device determines the maximum number of attempts for PRACH to be 2. That is, after the second attempt, the terminal device terminates further attempts and resume energy harvesting.

In some embodiments, determining the maximum number of attempts for PRACH to be the minimum value between the maximum number of attempts configured by the network device and the number of attempts supported by the stored energy of the terminal device. Optionally, when the maximum number of attempts configured by the network device is less than the number of attempts supported by the stored energy of the terminal device, determining the maximum number of attempts for PRACH to be the maximum number of attempts configured by the network device. Optionally, when the maximum number of attempts configured by the network device is greater than or equal to the number of attempts supported by the stored energy of the terminal device, determining the maximum number of attempts for PRACH to be the number of attempts supported by the stored energy of the terminal device.

In the method according to the embodiments, the maximum number of attempts for PRACH is determined based on the stored energy of the terminal device, ensuring that according to its actual energy storage situation, the terminal device does not attempt to transmit PRACH when its stored energy is insufficient. This can avoid wasting the stored energy of the terminal device and improve the success rate of PRACH transmission by the terminal device.

It is worth noting that the above steps 221, 222, 223, and 224 can be implemented individually or in combination, and the present disclosure does not impose any limitations in this regard.

FIG. 13 illustrates a flowchart of a channel transmission method according to some exemplary embodiments of the present disclosure. The method is performed by a network device and includes:

**Step 320:** receiving PRACH.

In some embodiments, the transmission mode of PRACH is determined based on the stored energy of the terminal device. It should be noted that the terminal device in the embodiments of the present disclosure can refer to a passive terminal device, also known as a zero-power device. In some embodiments, the terminal device is powered by harvesting ambient energy. Optionally, the terminal device is equipped with an energy harvesting module, which is configured to harvest ambient energy. As an example, as shown in FIG. 3, the energy harvesting module 141 can harvest energy carried by radio waves (wireless signals) in space, which is used to drive the low-power computing module 143 of the zero-power device 140 and implement backscattering communication. Taking RF energy harvesting as an example of energy harvesting method, the terminal device collects radio waves through an RF energy harvesting module, thereby obtaining radio energy and storing it in the energy storage unit. After obtaining sufficient energy, the energy storage unit can drive the low-power circuit to work for signal demodulation of the forward link and signal modulation, transmission, and other operations of the reverse link. In some embodiments, the energy harvested by the terminal device is greater than or equal to the stored energy. Due to inevitable energy loss, the energy stored by the terminal device may be less than the energy harvested by the terminal device.

In some embodiments, the PRACH received by the network device is transmitted by the terminal device when the stored energy of the terminal device meets the energy requirement for transmitting the PRACH. In some embodiments, the PRACH received by the network device is transmitted by the terminal device when the stored energy of the terminal device meets the first sum value. The first sum value is the sum of the energy requirement for transmitting the PRACH and the energy requirement for detecting RAR. In some embodiments, the PRACH received by the network device is transmitted by the terminal device when the stored energy of the terminal device meets the second sum value. The second sum value is the sum of the energy requirement for transmitting the PRACH, the energy requirement for detecting RAR, and the energy requirement for receiving RAR.

In some embodiments, the energy requirement for transmitting the PRACH includes any of the following:

**The first type:** energy requirement for a single transmission of PRACH.

Optionally, the PRACH received by the network device is transmitted by the terminal device in the case where the stored energy of the terminal device meets the energy requirement for a single transmission of PRACH. Optionally, the PRACH received by the network device is transmitted by the terminal device in the case where the stored energy of the terminal device meets both the energy requirement for a single transmission of PRACH and the energy requirement for detecting RAR. Optionally, the PRACH received by the network device is transmitted by the terminal device in the case where the stored energy of the terminal device meets the energy requirement for a single transmission of PRACH, the energy requirement for detecting RAR, and the energy requirement for receiving RAR.

**The second type:** energy requirement for repetition of PRACH.

Optionally, the PRACH received by the network device is transmitted by the terminal device in the case where the stored energy of the terminal device meets the energy requirement for repetition of PRACH. Optionally, the PRACH received by the network device is transmitted by the terminal device in the case where the stored energy of the terminal device meets both the energy requirement for repetition of PRACH and the energy requirement for detecting RAR. Optionally, the PRACH received by the network device is transmitted by the terminal device in the case where the stored energy of the terminal device meets the energy requirement for repetition of PRACH, the energy requirement for detecting RAR, and the energy requirement for receiving RAR.

In some embodiments, at least two PRACH resources in the PRACH resource set used for repetition of PRACH are not necessarily consecutive in the time domain, and the terminal device can perform energy harvesting between adjacent PRACH resources in the PRACH resource set. Therefore, even if the stored energy of the terminal device is less than the energy requirement for repetition of PRACH, the terminal device can still determine to transmit PRACH. Based on this, the PRACH received by the network device may be transmitted when the stored energy of the terminal device meets the product of the energy requirement for repetition of PRACH and a first proportion.

Optionally, the PRACH received by the network device is transmitted by the terminal device in the case where the stored energy of the terminal device meets the product of the energy requirement for repetition of PRACH and the first proportion, and also meets the energy requirement for detecting RAR. Optionally, the PRACH received by the network device is transmitted by the terminal device in the case where the stored energy of the terminal device meets the product of the energy requirement for repetition of PRACH and the first proportion, and also meets the product of the energy requirement for detecting RAR and the second proportion. Optionally, the PRACH received by the network device is transmitted by the terminal device in the case where the stored energy of the terminal device meets the energy requirement for repetition of PRACH, and also meets the product of the energy requirement for detecting RAR and the second proportion.

Optionally, the PRACH received by the network device is transmitted by the terminal device in the case where the stored energy of the terminal device meets the product of the energy requirement for repetition of PRACH and a first proportion, meets the energy requirement for detecting RAR, and meets the energy requirement for receiving RAR. Optionally, the PRACH received by the network device is transmitted by the terminal device in the case where the stored energy of the terminal device meets the product of the energy requirement for repetition of PRACH and a first proportion, and meets the product of the energy requirement for detecting RAR and a second proportion, and meets the energy requirement for receiving RAR. Optionally, the PRACH received by the network device is transmitted by the terminal device in the case where the stored energy of the terminal device meets the product of the energy requirement for repetition of PRACH and a first proportion, and meets the product of the energy requirement for detecting RAR and a second proportion, and meets the product of the energy requirement for receiving RAR and a third proportion. Optionally, the PRACH received by the network device is transmitted by the terminal device in the case where the stored energy of the terminal device meets the product of the energy requirement for repetition of PRACH and a first proportion, and meets the energy requirement for detecting RAR, and meets the product of the energy requirement for receiving RAR and a third proportion.

In some embodiments, the first proportion is predefined, or alternatively, determined based on parameters indicated by the network device. In some embodiments, the first proportion is related to the time interval between adjacent PRACH resources in the PRACH resource set. Optionally, the first proportion is negatively correlated with the time interval between adjacent PRACH resources in the PRACH resource set. The larger the time interval between adjacent PRACH resources in the PRACH resource set, the smaller the first proportion. The smaller the time interval between adjacent PRACH resources in the PRACH resource set, the larger the first proportion. In some embodiments, the second proportion is predefined, or alternatively, determined based on parameters indicated by the network device. In some embodiments, the second proportion is related to the time interval between adjacent PRACH resources in the PRACH resource set. In some embodiments, the third proportion is predefined, or alternatively, determined based on parameters indicated by the network device. In some embodiments, the third proportion is related to the time interval between adjacent PRACH resources in the PRACH resource set.

In some embodiments, the energy requirement for transmitting the PRACH is determined based on the transmit power of the PRACH. Optionally, the transmit power of the PRACH is determined based on at least one of: a target received power; a path loss; or a power offset. The target received power is configured by the network device. The path loss is obtained by the terminal device measuring the downlink signal. The power offset is configured by the higher layer and is configured according to the format of the random access preamble.

In some embodiments, the above method further includes: transmitting a target received power. This target received power is used to indicate the transmit power of PRACH for the terminal device.

In some embodiments, the transmission resource for the received PRACH is determined based on the stored energy of the terminal device. In some embodiments, the PRACH resource used for the received PRACH is determined

based on the stored energy of the terminal device. In some embodiments, the PRACH resource set used for the received PRACH is determined based on the stored energy of the terminal device.

Optionally, the PRACH resource set used for the received PRACH includes a target PRACH resource, which is the PRACH resource used by the terminal device for performing a single transmission of PRACH. Optionally, the PRACH resource set used for the received PRACH includes a target PRACH resource set, which is the PRACH resource set used by the terminal device for performing repetition of PRACH. The number of PRACH resources in the PRACH resource set used for the received PRACH is greater than or equal to the number of PRACH resources required for repetition of PRACH.

In some embodiments, the configurations of at least two PRACH resources in different PRACH resource sets are different. For example, the time intervals between adjacent PRACH resources in different PRACH resource sets are different. Optionally, the time interval between adjacent PRACH resources in the PRACH resource set used for the received PRACH is negatively correlated with the stored energy of the terminal device. The greater the stored energy of the terminal device transmitting the PRACH, the smaller the time intervals between adjacent PRACH resources in the PRACH resource set used for the received PRACH. The smaller the stored energy of the terminal device transmitting the PRACH, the larger the time intervals between adjacent PRACH resources in the PRACH resource set used for the received PRACH.

In some embodiments, the PRACH resource set used for the received PRACH is either the first PRACH resource set or the second PRACH resource set. The time interval between adjacent PRACH resources in the first PRACH resource set is a first time interval, and the time interval between adjacent PRACH resources in the second PRACH resource set is a second time interval, where the first time interval is less than the second time interval. The stored energy of the terminal device corresponding to the first PRACH resource set is greater than a first threshold, and the stored energy of the terminal device corresponding to the second PRACH resource set is greater than a second threshold, where the first threshold is greater than or equal to the second threshold.

In some embodiments, the PRACH resource set used for the received PRACH includes a second number of PRACH resources, where the second number is greater than the first number, and the first number represents the transmission times for repetition of PRACH.

In some embodiments, different random access preambles exist in the PRACH resource set used for the received PRACH. Different random access preambles are associated with different stored energies. Optionally, there is a one-to-one mapping relationship between different random access preambles and different stored energies. Illustratively, as shown in Table 1 or Table 2 above.

In some embodiments, different PRACH resources within the PRACH resource set used for the received PRACH belong to different PRACH occasions. Each PRACH occasion corresponds to a RAR reception window. In some embodiments, the PRACH resource set used for the received PRACH includes the PRACH resource belonging to the first PRACH occasion.

Optionally, the start delay of the RAR reception window corresponding to the first PRACH occasion is associated with the stored energy. This start delay refers to the time from the first moment when the PRACH transmission is completed to the second moment when RAR detection begins. In some embodiments, there is a one-to-one mapping relationship between the start delay of the RAR reception window corresponding to the first PRACH occasion and the stored energy. For example, as shown in Table 3 or Table 4 above.

Optionally, the window size of the RAR reception window corresponding to the first PRACH occasion is associated with the stored energy. This window size can also be understood as the time length corresponding to the reception window, which refers to the time length from the start of detecting the RAR to the end of detecting the RAR. In some embodiments, there is a one-to-one mapping relationship between the window size of the RAR reception window corresponding to the first PRACH occasion and the stored energy. For example, as shown in Table 5 or Table 6 above.

In some embodiments, the transmit power of the received PRACH is determined based on the stored energy of the terminal device.

In some embodiments, the transmit power of the PRACH belonging to the $i^{th}$ transmission occasion among the received PRACHs is determined based on the stored energy of the terminal device. i is a positive integer. Optionally, the transmit power of the PRACH belonging to the $i^{th}$ transmission occasion is the minimum value among: a target transmit power; a power corresponding to the stored energy of the terminal device; and a maximum output power of the terminal device at the $i^{th}$ transmission occasion. The target transmit power is determined based on at least one of a target received power, a path loss, or a power offset. The target received power is configured by the network device. The path loss is obtained by the terminal device measuring the downlink signal. The power offset is configured by the higher layer according to the format of the random access preamble.

Illustratively, the calculation formula for the target transmit power is: $P_{PRACH,Tx} = P_{PRACH,target} + PL$. $P_{PRACH,target}$ represents the target received power, and PL represents the path loss.

Illustratively, the calculation formula for the transmit power of the PRACH belonging to the $i^{th}$ transmission occasion is: $P_{PRACH}(i) = \min\{P_{CMAX}(i), P_S(i) + P_{PRACH,Tx}\}$ $P_{PRACH,Tx}$ represents the target transmit power of the PRACH, $P_S(i)$ represents the power corresponding to the stored energy of the terminal device, and $P_{CMAX}(i)$ represents the

maximum output power of the terminal device at the $i^{th}$ transmission occasion.

In some embodiments, the maximum number of attempts for the received PRACH is determined based on the stored energy of the terminal device.

In some embodiments, the stored energy of the terminal device can support one or multiple attempts in the random access procedure, and the stored energy of the terminal device is consumed during the attempt. Therefore, although the network device may configure a maximum number of attempts, due to the randomness of the stored energy of the terminal device, when the stored energy of the terminal device is insufficient to support another attempt, the terminal device needs to terminate the attempt. Therefore, the maximum number of attempts for PRACH is affected by the stored energy of the terminal device.

In some embodiments, the maximum number of attempts for the received PRACH is the number of attempts supported by the stored energy of the terminal device. In other embodiments, the maximum number of attempts for the received PRACH is the minimum value between the maximum number of attempts configured by the network device and the number of attempts supported by the stored energy of the terminal device.

In some embodiments, the above method further includes: transmitting the configured maximum number of attempts.

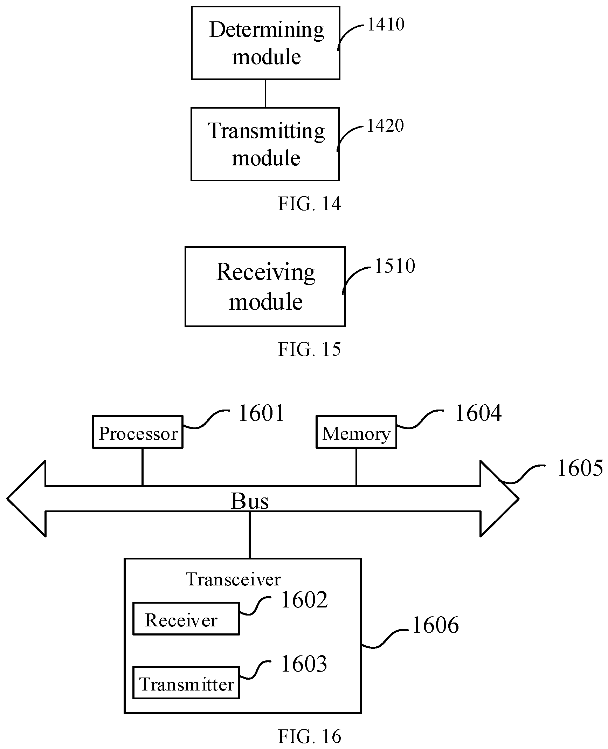

FIG. 14 illustrates the structural block diagram of a channel transmission apparatus according to some exemplary embodiments of the present disclosure. The apparatus includes:

**a determining module 1410, configured to** determine the transmission mode of PRACH based on the stored energy of the apparatus. It should be noted that the apparatus in the embodiments of the present disclosure specifically refers to a zero-power device. In some embodiments, the apparatus is powered by harvesting ambient energy. Optionally, the apparatus is equipped with an energy harvesting module, which is used to harvest ambient energy.

**The determining module 1410 is further configured to** calculate or detect the stored energy of the apparatus to determine the amount of the stored energy of the apparatus.

**The determining module 1410 is further configured to** determine whether to transmit PRACH based on the stored energy of the apparatus. This includes: determining to transmit PRACH based on the stored energy of the apparatus; or determining not to transmit PRACH based on the stored energy of the apparatus.

In some embodiments, the apparatus further includes:

**a calculation module, configured to** determine whether the stored energy of the apparatus meets the energy required for transmitting PRACH when the apparatus needs to transmit PRACH.

**The determining module 1410 is further configured to**: determine to transmit PRACH in the case where the stored energy of the apparatus meets the energy required for transmitting PRACH; and/or determine not to transmit PRACH in the case where the stored energy of the apparatus does not meet the energy required for transmitting PRACH.

In some embodiments, based on the stored energy of the apparatus, determining to transmit PRACH.

Optionally, in the case where the stored energy of the apparatus meets the energy requirements for transmitting PRACH, determining to transmit PRACH. Illustratively, as shown in FIG. 6, the energy required to be consumed by the apparatus for transmitting PRACH is E1. Therefore, when the stored energy of the apparatus is greater than or equal to E1, determining to transmit PRACH.

Optionally, in the case where the stored energy of the apparatus meets the first sum value, determining to transmit PRACH. The first sum value is the sum of the energy requirement for transmitting PRACH and the energy requirement for detecting RAR. Illustratively, as shown in FIG. 6, the energy required to be consumed by the apparatus for transmitting PRACH is E1, and the energy required to be consumed for detecting RAR is E2. Therefore, when the stored energy of the apparatus is greater than or equal to the sum of E1 and E2, determining to transmit PRACH.

Optionally, in the case where the stored energy of the apparatus meets the second sum value, determining to transmit PRACH. The second sum value is the sum of the energy requirement for transmitting PRACH, the energy requirement for detecting RAR, and the energy requirement for receiving RAR. Illustratively, as shown in FIG. 6, the energy required to be consumed by the apparatus for transmitting PRACH is E1, the energy required to be consumed for detecting RAR is E2, and the energy required to be consumed for receiving RAR is E3. Therefore, when the stored energy of the apparatus is greater than or equal to the sum of E1, E2, and E3, determining to transmit PRACH.

<u>For the case of not transmitting PRACH:</u>

In some embodiments, based on the stored energy of the apparatus, determining not to transmit PRACH.

Optionally, in the case where the stored energy of the apparatus does not meet the energy requirement for transmitting PRACH, determining not to transmit PRACH, to wait for the next PRACH transmission occasion, and to

repeatedly determine whether the stored energy of the apparatus meets the energy requirement for transmitting PRACH. Illustratively, as shown in FIG. 6, the energy required to be consumed by the apparatus for transmitting PRACH is E1. Therefore, when the stored energy of the apparatus is less than E1, determining not to transmit PRACH.

Optionally, in the case where the stored energy of the apparatus does not meet the first sum value, determining not to transmit PRACH, to wait for the next PRACH transmission occasion, and to repeatedly determine whether the stored energy of the apparatus meets the first sum value. The first sum value is the sum of the energy requirement for transmitting PRACH and the energy requirement for detecting RAR. Illustratively, as shown in FIG. 6, the energy required to be consumed by the apparatus for transmitting PRACH is E1 and the energy required to be consumed for detecting RAR is E2, then determining not to transmit PRACH when the stored energy of the apparatus is greater than or equal to E1 but less than the sum of E1 and E2.

Optionally, in the case where the stored energy of the apparatus does not meet the second sum value, determining not to transmit PRACH, to wait for the next PRACH transmission occasion, and to repeatedly determine whether the stored energy of the apparatus meets the energy requirement for transmitting PRACH, the energy requirement for detecting RAR, and the energy requirement for receiving RAR. The second sum value is the sum of the energy requirements for transmitting PRACH, the energy requirement for detecting RAR, and the energy requirement for receiving RAR. Illustratively, as shown in FIG. 6, the energy required to be consumed by the apparatus for transmitting PRACH is E1, the energy required to be consumed for detecting RAR is E2, and the energy required to be consumed for receiving RAR is E3, then determining not to transmit PRACH when the stored energy of the apparatus is greater than or equal to the sum of E1 and E2, but less than the sum of E1, E2, and E3.

In some embodiments, the energy requirement for transmitting PRACH includes any of the following:

**The first type:** energy requirement for a single transmission of PRACH.

In some embodiments, when the stored energy of the apparatus meets the energy requirement for a single transmission of PRACH, determining to transmit PRACH. For example, as shown in FIG. 7, the energy required to be consumed by the apparatus for the first transmission of PRACH is E4. Therefore, when the stored energy of the apparatus is greater than or equal to E4, determining to transmit PRACH. The energy required to be consumed by the apparatus for the second transmission of PRACH is E6. Therefore, when the stored energy of the apparatus is greater than or equal to E6, determining to transmit PRACH.

Optionally, when the stored energy of the apparatus meets the energy requirements for a single transmission of PRACH and also meets the energy requirement for detecting RAR, determining to transmit PRACH. Illustratively, as shown in FIG. 7, the energy required to be consumed for the first transmission of PRACH by the apparatus is E4, and the energy required to be consumed for the first detection of RAR is E5. Therefore, when the stored energy of the apparatus is greater than or equal to the sum of E4 and E5, determining to transmit PRACH. The energy required to be consumed for the second transmission of PRACH by the apparatus is E6, and the energy required to be consumed for the second detection of RAR is E7. Therefore, when the stored energy of the apparatus is greater than or equal to the sum of E6 and E7, determining to transmit PRACH.

Optionally, when the stored energy of the apparatus meets the energy requirements for a single transmission of PRACH, the energy requirement for detecting RAR, and the energy requirement for receiving RAR, determining to transmit PRACH. Illustratively, as shown in FIG. 7, the apparatus receives RAR during the third transmission of PRACH. The energy required to be consumed during the third transmission of PRACH by the apparatus is E8, the energy required to be consumed during the third detection of RAR is E9, and the energy required to be consumed for receiving RAR is E10. Therefore, when the stored energy of the apparatus is greater than or equal to the sum of E8, E9, and E10, determining to transmit PRACH.

In some embodiments, in the case where the stored energy of the apparatus does not meet the energy requirement for a single transmission of PRACH, determining not to transmit PRACH, to wait for the next PRACH transmission occasion, and to repeatedly determine whether the stored energy of the apparatus meets the energy requirement for a single transmission of PRACH. Optionally, in the case where the stored energy of the apparatus does not meet the sum of the energy requirement for a single transmission of PRACH and the energy requirement for detecting RAR, determining not to transmit PRACH, to wait for the next PRACH transmission occasion, and to repeatedly determine whether the stored energy of the apparatus meets the sum of the energy requirement for a single transmission of PRACH and the energy requirement for detecting RAR. Optionally, in the case where the stored energy of the apparatus does not meet the sum of the energy requirement for a single transmission of PRACH, the energy requirement for detecting RAR, and the energy requirement for receiving RAR, determining not to transmit PRACH, to wait for the next PRACH transmission occasion, and repeatedly determine whether the stored energy of the apparatus meets the sum of the energy requirement for a single transmission of PRACH, the energy requirement for detecting RAR, and the energy requirement for receiving RAR.

**The second type:** energy requirement for repetition of PRACH.

In some embodiments, in the case where the stored energy of the apparatus meets the energy requirement for repetition of PRACH, determining to transmit PRACH. Optionally, in the case where the stored energy of the apparatus

meets the energy requirement for n repetitions of PRACH, determining to transmit PRACH, where n is a positive integer. Optionally, n is preset. Illustratively, as shown in FIG. 8, assuming n=4, the energy required to be consumed by the apparatus for the first repetition of PRACH is E11. Therefore, when the stored energy of the apparatus is greater than or equal to E11, determining to transmit PRACH. The energy required to be consumed by the apparatus for the second repetition of PRACH is E13. Therefore, when the stored energy of the apparatus is greater than or equal to E136, determining to transmit PRACH.

Optionally, in the case where the stored energy of the apparatus meets the energy requirements for repetition of PRACH and also meets the energy requirements for detecting RAR, determining to transmit PRACH. Optionally, when the stored energy of the apparatus meets the energy requirements for n repetitions of PRACH and also meets the energy requirement for detecting RAR during the repetitions, determining to transmit PRACH. Illustratively, as shown in FIG. 8, assuming n=4, the energy required to be consumed by the apparatus for the first repetition of PRACH is E11, and the energy required to be consumed for detecting RAR during the first repetition is E12. Therefore, when the stored energy of the apparatus is greater than or equal to the sum of E11 and E12, determining to transmit PRACH. The energy required to be consumed by the apparatus for the second repetition of PRACH is E13, and the energy required to be consumed for detecting RAR during the second repetition is E14. Therefore, when the stored energy of the apparatus is greater than or equal to the sum of E13 and E14, determining to transmit PRACH.

Optionally, in the case where the stored energy of the apparatus meets the energy requirements for repetition of PRACH, the energy requirement for detecting RAR, and the energy requirement for receiving RAR, determining to transmit PRACH. Optionally, in the case where the stored energy of the apparatus meets the energy requirement for n repetitions of PRACH, the energy requirement for detecting RAR, and the energy requirement for receiving RAR, determining to transmit PRACH. In some embodiments, for repeated transmission, RAR can be detected only once, multiple times, or n times. This is not limited in the embodiments of the present disclosure. In the embodiments of the present disclosure, detecting RAR once is exemplified for illustration. Illustratively, as shown in FIG. 8, assuming n=4, the apparatus receives RAR during the third repetition of PRACH. The energy required to be consumed during the third repetition of PRACH by the apparatus is E15, the energy required to be consumed during the third detection of RAR is E16, and the energy required to be consumed for receiving RAR is E17. Therefore, when the stored energy of the apparatus is greater than or equal to the sum of E15, E16, and E17, determining to transmit PRACH.

In some embodiments, in the case where the stored energy of the apparatus does not meet the energy requirement for repetition of PRACH, determining not to transmit PRACH, to wait for the next PRACH transmission occasion, and to repeatedly determine whether the stored energy of the apparatus meets the energy requirement for repetition of PRACH. Optionally, in the case where the stored energy of the apparatus does not meet the sum of the energy requirement for repetition of PRACH and the energy requirement for detecting RAR, determining not to transmit PRACH, to wait for the next PRACH transmission occasion, and to repeatedly determine whether the stored energy of the apparatus meets the sum of the energy requirement for repetition of PRACH and the energy requirement for detecting RAR. Optionally, in the case where the stored energy of the apparatus does not meet the sum of the energy requirement for repetition of PRACH, the energy requirement for detecting RAR, and the energy requirement for receiving RAR, determining not to transmit PRACH, to wait for the next PRACH transmission occasion, and to repeatedly determine whether the stored energy of the apparatus meets the sum of the energy requirement for repetition of PRACH, the energy requirement for detecting RAR, and the energy requirement for receiving RAR.

In some embodiments, at least two PRACH resources within the PRACH resource set used for repetition of PRACH are not necessarily consecutive in the time domain. The apparatus can perform energy harvesting between adjacent PRACH resources within the PRACH resource set. Therefore, even if the stored energy of the apparatus is less than the energy requirement for repetition of PRACH, the apparatus can still determine to transmit PRACH.

In some embodiments, in the case where the stored energy of the apparatus meets the product of the energy requirement for repetition of PRACH and the first proportion, determining to transmit PRACH.

Optionally, in the case where the stored energy of the apparatus meets the product of the energy requirement for repetition of PRACH and the first proportion, and also meets the energy requirement for detecting RAR, determining to transmit PRACH. Optionally, in the case where the stored energy of the apparatus meets the product of the energy requirement for repetition of PRACH and the first proportion, and also meets the product of the energy requirement for detecting RAR and the second proportion, determining to transmit PRACH. Optionally, in the case where the stored energy of the apparatus meets the product of the energy requirement for repetition of PRACH and the first proportion, and also meets the energy requirement for detecting RAR, and also meets the energy requirement for receiving RAR, determining to transmit PRACH. Optionally, in the case where the stored energy of the apparatus meets the product of the energy requirement for repetition of PRACH and the first proportion, and also meets the product of the energy requirement for detecting RAR and the second proportion, and also meets the energy requirement for receiving RAR, determining to transmit PRACH. Optionally, in the case where the stored energy of the apparatus meets the product of the energy requirement for repetition of PRACH and the first proportion, and also meets the energy requirement for detecting RAR, and also meets the product of the energy requirement for receiving RAR and the third proportion, determining to transmit

PRACH. Optionally, in the case where the stored energy of the apparatus meets the product of the energy requirement for repetition of PRACH and the first proportion, and also meets the product of the energy requirement for detecting RAR and the second proportion, and also meets the product of the energy requirement for receiving RAR and the third proportion, determining to transmit PRACH.

In some embodiments, in the case where the stored energy of the apparatus does not meet the product of the energy requirement for repetition of PRACH and the first proportion, determining not to transmit PRACH, to wait for the next PRACH transmission occasion, and to repeatedly determine whether the stored energy of the apparatus meets the product of the energy requirement for repetition of PRACH and the first proportion.

Optionally, in the case where the stored energy of the apparatus does not meet the sum of the product of the energy requirement for repetition of PRACH and the first proportion, and the energy requirement for detecting RAR, determining not to transmit PRACH, to wait for the next PRACH transmission occasion, and repeatedly determine whether the stored energy of the apparatus meets the sum of the product of the energy requirement for repetition of PRACH and the first proportion, and the energy requirement for detecting RAR. Optionally, in the case where the stored energy of the apparatus does not meet the sum of the product of the energy requirement for repetition of PRACH and the first proportion, and the product of the energy requirement for detecting RAR and the second proportion, determining not to transmit PRACH, to wait for the next PRACH transmission occasion, and to repeatedly determine whether the stored energy of the terminal device meets the sum of the product of the energy requirement for repetition of PRACH and the first proportion, and the product of the energy requirement for detecting RAR and the second proportion.

Optionally, in the case where the stored energy of the apparatus does not meet the sum of the product of the energy requirement for repetition of PRACH and the first proportion, the energy requirement for detecting RAR, and the energy requirement for receiving RAR, determining not to transmit PRACH, to wait for the next PRACH transmission occasion, and to repeatedly determine whether the stored energy of the terminal device meets the sum of the product of the energy requirement for repetition of PRACH and the first proportion, the energy requirement for detecting RAR, and the energy requirement for receiving RAR. Optionally, in the case where the stored energy of the apparatus does not meet the sum of the product of the energy requirement for repetition of PRACH and the first proportion, the product of the energy requirement for detecting RAR and the second proportion, and the energy requirement for receiving RAR, determining not to transmit PRACH, to wait for the next PRACH transmission occasion, and to repeatedly determine whether the stored energy of the terminal device meets the sum of the product of the energy requirement for repetition of PRACH and the first proportion, the product of the energy requirement for detecting RAR and the second proportion, and the energy requirement for receiving RAR. Optionally, in the case where the stored energy of the apparatus does not meet the sum of the product of the energy requirement for repetition of PRACH and the first proportion, the product of the energy requirement for detecting RAR and the second proportion, and the product of the energy requirement for receiving RAR and the third proportion, determining not to transmit PRACH, to wait for the next PRACH transmission occasion, and to repeatedly determine whether the stored energy of the terminal device meets the sum of the product of the energy requirement for repetition of PRACH and the first proportion, the product of the energy requirement for detecting RAR and the second proportion, and the product of the energy requirement for receiving RAR and the third proportion. Optionally, in the case where the stored energy of the apparatus does not meet the sum of the product of the energy requirement for repetition of PRACH and the first proportion, the energy requirement for detecting RAR, and the product of the energy requirement for receiving RAR and the third proportion, determining not to transmit PRACH, to wait for the next PRACH transmission occasion, and to repeatedly determine whether the stored energy of the terminal device meets the sum of the product of the energy requirement for repetition of PRACH and the first proportion, the energy requirement for detecting RAR, and the product of the energy requirement for receiving RAR and the third proportion.

In some embodiments, the first proportion is predefined. For example, in the case where it is required that the terminal device determines to transmit PRACH when the stored energy of the terminal device exceeds 80% of the energy requirement for repetition of PRACH, then the first proportion is 80%. In some embodiments, the first proportion is determined based on parameters indicated by the network device. In some embodiments, the first proportion is related to the time interval between adjacent PRACH resources in the PRACH resource set. Optionally, the first proportion is negatively correlated with the time interval between adjacent PRACH resources in the PRACH resource set. The larger the time interval between adjacent PRACH resources in the PRACH resource set, the smaller the first proportion. The smaller the time interval between adjacent PRACH resources in the PRACH resource set, the larger the first proportion. In some embodiments, the second proportion is predefined, or determined based on parameters indicated by the network device. In some embodiments, the second proportion is related to the time interval between adjacent PRACH resources in the PRACH resource set. In some embodiments, the third proportion is predefined, or determined based on parameters indicated by the network device. In some embodiments, the third proportion is related to the time interval between adjacent PRACH resources in the PRACH resource set.

In some embodiments, the energy requirement for the transmitting PRACH is determined based on the transmit power of the PRACH. Optionally, the transmit power of the PRACH is determined based on at least one of: a target received power, a path loss, or a power offset. The target received power is configured by the network device. The path loss is

obtained by the apparatus measuring the downlink signal. The power offset is configured by the higher layer based on the format of the random access preamble.

**The determining module 1410 is further configured to** determine the transmission resource for PRACH based on the stored energy of the apparatus. In the case of determining to transmit PRACH, determining the transmission resource for transmitting PRACH based on the stored energy of the apparatus.

In some embodiments, the PRACH resource to be used this time is selected from at least two PRACH resources based on the stored energy of the apparatus. The PRACH resource to be used this time is for a single transmission of the PRACH. In some embodiments, the PRACH resource set to be used this time is selected from at least two PRACH resource sets based on the stored energy of the apparatus. Each PRACH resource set includes at least two PRACH resources.

Optionally, the PRACH resource set to be used this time includes a target PRACH resource, which is used for a single transmission of PRACH. Optionally, the PRACH resource set to be used this time includes a target PRACH resource set, which is used for repetition of PRACH. The number of PRACH resources in the PRACH resource set to be used this time is greater than or equal to the number of PRACH resources required for repetition of PRACH. That is, the number of PRACH resources in the PRACH resource set to be used this time is greater than or equal to the number of PRACH resources in the target PRACH resource set.

In some embodiments, the configurations of at least two PRACH resources within different PRACH resource sets are different. For example, the time intervals between adjacent PRACH resources in different PRACH resource sets are different. Optionally, the stored energy of the apparatus is negatively correlated with the time interval between adjacent PRACH resources in the PRACH resource set to be used this time. The greater the stored energy of the apparatus, the smaller the time interval between adjacent PRACH resources in the selected PRACH resource set to be used this time; conversely, the smaller the stored energy of the apparatus, the larger the time interval between adjacent PRACH resources in the selected PRACH resource set to be used this time.

In some embodiments, in the case where the stored energy of the apparatus is greater than a first threshold, a first PRACH resource set is selected from at least two PRACH resource sets as the PRACH resource set to be used this time. In the case where the stored energy of the apparatus is less than a second threshold, a second PRACH resource set is selected from at least two PRACH resource sets as the PRACH resource set to be used this time. The first threshold is greater than or equal to the second threshold. The time interval between adjacent PRACH resources in the first PRACH resource set is a first time interval, and the time interval between adjacent PRACH resources in the second PRACH resource set is a second time interval, where the first time interval is less than the second time interval.

In some embodiments, in the case where the stored energy of the apparatus is greater than a first threshold, the first PRACH resource set is selected from at least two PRACH resource sets as the PRACH resource set to be used this time. In the case where the stored energy of the apparatus is less than a second threshold, the second PRACH resource set is selected from at least two PRACH resource sets as the PRACH resource set to be used this time. The first threshold is greater than or equal to the second threshold. The first PRACH resource set includes at least two PRACH resource subsets, and the second PRACH resource set includes at least two PRACH resource subsets. The time interval between adjacent PRACH resource subsets in the first PRACH resource set is a first time interval, and the time interval between adjacent PRACH resource subsets in the second PRACH resource set is a second time interval, where the first time interval is less than the second time interval.

In some embodiments, in the case where the stored energy of the apparatus is greater than a first threshold, a first PRACH resource subset is selected from the target PRACH resource set as the PRACH resource set to be used this time. In the case where the stored energy of the apparatus is less than a second threshold, a second PRACH resource subset is selected from the target PRACH resource set as the PRACH resource set to be used this time. The first threshold is greater than or equal to the second threshold. The time interval between adjacent PRACH resources in the first PRACH resource subset is a first time interval, and the time interval between adjacent PRACH resources in the second PRACH resource subset is a second time interval, where the first time interval is less than the second time interval.

In some embodiments, the PRACH resource set to be used this time includes a second number of PRACH resources, where the second number is greater than the first number, and the first number represents transmission times for repetition of PRACH.

**The determining module 1410 is further configured to** select a first number of PRACH resources from the PRACH resource set to be used this time.

In some embodiments, the stored energy of the apparatus is negatively correlated with the time interval between adjacent PRACH resources within the first number of PRACH resources. The greater the stored energy of the apparatus, the smaller the time interval between adjacent PRACH resources within the selected first number of PRACH resources. The smaller the stored energy of the apparatus, the larger the time interval between adjacent PRACH resources within the selected first number of PRACH resources. It is worth noting that the time intervals between adjacent PRACH resources may be the same or different. In the embodiments of the present disclosure, the example where the time intervals between adjacent PRACH resources are the same is used for illustration.

Optionally, in the case where the time intervals between adjacent PRACH resources are different, the stored energy of the apparatus is negatively correlated with the average value of the time intervals between adjacent PRACH resources in the first number of PRACH resources. In the method according to the embodiments, PRACH resources suitable for the transmission times for repetition of PRACH are selected from the PRACH resource set to be used this time based on the transmission times for repetition of PRACH. The apparatus can use an accurate amount of PRACH resources, avoiding resource waste and facilitating the improvement of the success rate of PRACH transmission by the apparatus.

In some embodiments, different random access preambles exist in the PRACH resource set to be used this time. Different random access preambles are associated with different stored energies. Optionally, there is a one-to-one mapping relationship between different random access preambles and different stored energies. Illustratively, as shown in Table 1 or Table 2 above.

**The determining module 1410 is further configured to** select the first random access preamble from the PRACH resource set to be used this time. The first random access preamble is associated with the stored energy. For example, the current stored energy of the apparatus is stored energy 1, the first random access preamble selected is random access preamble 1.

In some embodiments, different PRACH resources in the PRACH resource set to be used this time belong to different PRACH occasions. Each PRACH occasion corresponds to a RAR reception window. The method further includes: selecting a PRACH resource belonging to the first PRACH occasion from the PRACH resource set to be used this time.

Optionally, the start delay of the RAR reception window corresponding to the first PRACH occasion is associated with the stored energy. This start delay refers to the time from the first moment when the PRACH transmission is completed to the second moment when the RAR starts to be detected. Optionally, the start delay of the RAR reception window corresponding to the first PRACH occasion is negatively correlated with the stored energy. The greater the stored energy of the apparatus, the smaller the start delay of the RAR reception window corresponding to the first PRACH occasion. The smaller the stored energy of the apparatus, the larger the start delay of the RAR reception window corresponding to the first PRACH occasion. That is, when the stored energy of the apparatus is sufficient, the first PRACH occasion corresponding to the RAR reception window with a smaller start delay is selected. When the stored energy of the apparatus is insufficient, the first PRACH occasion corresponding to the RAR reception window with a larger start delay is selected, allowing the apparatus sufficient time for energy harvesting to ensure the next PRACH transmission.

In some embodiments, there exists a one-to-one mapping relationship between the start delay of the RAR reception window corresponding to the first PRACH occasion and the stored energy. As an example, as shown in Table 3 or Table 4 above.

Optionally, the window size of the RAR reception window corresponding to the first PRACH occasion is associated with the stored energy. This window size can also be understood as the time length corresponding to the reception window, which refers to the time length from the start of detecting the RAR to the end of detecting the RAR. Optionally, the window size of the RAR reception window corresponding to the first PRACH occasion is negatively correlated with the stored energy. The greater the stored energy of the apparatus, the smaller the window size of the RAR reception window corresponding to the first PRACH occasion. The smaller the stored energy of the apparatus, the larger the window size of the RAR reception window corresponding to the first PRACH occasion. That is, in the case where the apparatus has sufficient stored energy, the first PRACH occasion corresponding to the RAR reception window with a smaller window size is selected. In the case where the apparatus has insufficient stored energy, the first PRACH occasion with a larger window size for the RAR reception window is selected, allowing the apparatus sufficient time for energy harvesting to ensure the next PRACH transmission.

In some embodiments, there exists a one-to-one mapping relationship between the window size of the RAR reception window corresponding to the first PRACH occasion and the stored energy. Illustratively, as shown in Table 5 or Table 6 above.

**The determining module 1410 is further configured to** determine the transmit power of the PRACH based on the stored energy of the apparatus. In the case of determining to transmit the PRACH, determining the transmit power for transmitting the PRACH based on the stored energy of the apparatus.

In some embodiments, determining the transmit power of the PRACH belonging to the $i^{th}$ transmission occasion based on the stored energy of the apparatus. i is a positive integer. Optionally, the transmit power of the PRACH belonging to the $i^{th}$ transmission occasion is the minimum of the following three values: the target transmit power, the power corresponding to the stored energy of the apparatus, and the maximum output power of the apparatus at the $i^{th}$ transmission occasion. The target transmit power is determined based on at least one of a target received power, a path loss, or a power offset. The target received power is configured by the network device. The path loss is obtained by the terminal device measuring the downlink signal. The power offset is configured by the higher layer according to the format of the random access preamble.

Illustratively, the calculation formula for the target transmit power is: $P_{PRACH,T_x} = P_{PRACH,target} + PL$. $P_{PRACH,target}$

represents the target received power, and PL represents the path loss.

Illustratively, the calculation formula for the transmit power of the PRACH belonging to the $i^{th}$ transmission occasion is: $P_{PRACH}(i) = \min\{P_{CMAX}(i), P_S(i) + P_{PRACH,Tx}\}$. $P_{PRACH,Tx}$ is the target transmit power of the PRACH, $P_S(i)$ is the power corresponding to the stored energy of the apparatus, and $P_{CMAX}(i)$ is the maximum output power of the apparatus at the $i^{th}$ transmission occasion.

**The determining module 1410 is further configured to** determine the maximum number of attempts for PRACH based on the stored energy of the apparatus. In the case of determining to transmit PRACH, determining the maximum number of attempts for transmitting PRACH based on the stored energy of the apparatus.

In some embodiments, the stored energy of the apparatus can support one or multiple attempts during the random access procedure, and the stored energy of the terminal device is consumed during the attempts. Therefore, although the network device may configure a maximum number of attempts, due to the randomness of the stored energy of the apparatus, if the stored energy of the apparatus is insufficient to support another attempt, the apparatus needs to terminate further attempts. Consequently, the maximum number of attempts for PRACH is influenced by the stored energy of the apparatus.

In some embodiments, determining the maximum number of attempts for PRACH to be the number of attempts supported by the stored energy of the apparatus. For example, if the number of attempts supported by the stored energy of the apparatus is 2, determining the maximum number of attempts for PRACH to be 2. As an example, as shown in FIG. 12, assuming the stored energy of the apparatus is the sum of E18, E19, and E20. E18 represents the energy required for the first attempt, E19 represents the energy required for the second attempt, and E20 is less than the energy required for the third attempt. In this case, the apparatus determines that the maximum number of attempts for PRACH is 2. That is, after the second attempt, the apparatus terminates further attempts and proceeds to energy harvesting.

In some embodiments, determining the maximum number of attempts for PRACH to be the minimum value between the maximum number of attempts configured by the network device and the number of attempts supported by the stored energy of the apparatus. Optionally, when the maximum number of attempts configured by the network device is less than the number of attempts supported by the stored energy of the apparatus, determining the maximum number of attempts for PRACH to be the maximum number of attempts configured by the network device. Optionally, when the maximum number of attempts configured by the network device is greater than or equal to the number of attempts supported by the stored energy of the apparatus, determining the maximum number of attempts for PRACH to be the number of attempts supported by the stored energy of the apparatus.

In some embodiments, the apparatus further includes:

**a transmitting module 1420, configured to** transmit PRACH.

**a receiving module, configured to** receive the target received power and/or the configured maximum number of attempts transmitted by the network device.

FIG. 15 illustrates the structural block diagram of a channel transmission apparatus according to some exemplary embodiments of the present disclosure. The apparatus includes:

**a receiving module 1510, configured to** receive PRACH.

In some embodiments, the transmission mode of PRACH is determined based on the stored energy of the terminal device. It should be noted that the terminal device in the embodiments of the present disclosure can refer to a passive terminal device, also known as a zero-power device. In some embodiments, the terminal device is powered by harvesting ambient energy. Optionally, the terminal device is equipped with an energy harvesting module, which is configured to harvest ambient energy. As an example, as shown in FIG. 3, the energy harvesting module 141 can harvest energy carried by radio waves (wireless signals) in space, which is used to drive the low-power computing module 143 of the zero-power device 140 and implement backscattering communication. Taking RF energy harvesting as an example of energy harvesting method, the terminal device collects radio waves through an RF energy harvesting module, thereby obtaining radio energy and storing it in the energy storage unit. After acquiring sufficient energy, the energy storage unit can drive the low-power circuit to work for signal demodulation of the forward link and signal modulation, transmission, and other operations of the reverse link. In some embodiments, the energy harvested by the terminal device is greater than or equal to the stored energy. Since energy loss cannot be avoided, the energy stored by the terminal device may be less than the energy harvested by the terminal device.

In some embodiments, the PRACH received by the apparatus is transmitted by the terminal device when its stored energy meets the energy requirement for transmitting the PRACH. In some embodiments, the PRACH received by the apparatus is transmitted by the terminal device when the stored energy of the terminal device meets a first sum value. The first sum value is the sum of the energy requirement for transmitting the PRACH and the energy requirement for detecting RAR. In some embodiments, the PRACH received by the apparatus is transmitted by the terminal device when the stored energy of the terminal device meets a second sum value. The second sum value is the sum of the energy requirement for transmitting the PRACH, the energy requirement for detecting RAR, and the energy requirement for

receiving RAR.

In some embodiments, the energy requirement for transmitting the PRACH includes any of the following:

**The first type:** energy requirement for a single transmission of PRACH.

Optionally, the PRACH received by the apparatus is transmitted by the terminal device in the case where the stored energy of the terminal device meets the energy requirement for a single transmission of PRACH. Optionally, the PRACH received by the apparatus is transmitted by the terminal device in the case where the stored energy of the terminal device meets both the energy requirement for a single transmission of PRACH and the energy requirement for detecting RAR. Optionally, the PRACH received by the apparatus is transmitted by the terminal device in the case where the stored energy of the terminal device meets the energy requirement for a single transmission of PRACH, the energy requirement for detecting RAR, and the energy requirement for receiving RAR.

**The second type:** energy requirements for repetition of PRACH.

Optionally, the PRACH received by the apparatus is transmitted by the terminal device in the case where the stored energy of the terminal device meets the energy requirement for repetition of PRACH. Optionally, the PRACH received by the apparatus is transmitted by the terminal device in the case where the stored energy meets both the energy requirement for repetition of PRACH and the energy requirement for detecting RAR. Optionally, the PRACH received by the apparatus is transmitted by the terminal device in the case where the stored energy of the terminal device meets the energy requirement for repetition of PRACH, the energy requirement for detecting RAR, and the energy requirement for receiving RAR.

In some embodiments, at least two PRACH resources within the PRACH resource set used for repetition of PRACH are not necessarily consecutive in the time domain, and the terminal device can perform energy harvesting between adjacent PRACH resources within the PRACH resource set. Therefore, even if the stored energy of the terminal device is less than the energy requirement for repetition of PRACH, the terminal device can still determine to transmit PRACH. Based on this, the PRACH received by the network device may be transmitted when the stored energy of the terminal device meets the product of the energy requirement for repetition of PRACH and a first proportion.

Optionally, the PRACH received by the apparatus is transmitted by the terminal device in the case where the stored energy of the terminal device meets the product of the energy requirement for repetition of PRACH and the first proportion, and also meets the energy requirement for detecting RAR. Optionally, the PRACH received by the network device is transmitted by the terminal device in the case where the stored energy of the terminal device meets the product of the energy requirement for repetition of PRACH and the first proportion, and also meets the product of the energy requirement for detecting RAR and the second proportion. Optionally, the PRACH received by the network device is transmitted by the terminal device in the case where the stored energy of the terminal device meets the energy requirement for repetition of PRACH, and also meets the product of the energy requirement for detecting RAR and the second proportion.

Optionally, the PRACH received by the apparatus is transmitted by the terminal device in the case where the stored energy of the terminal device meets the product of the energy requirement for repetition of PRACH and a first proportion, meets the energy requirement for detecting RAR, and meets the energy requirement for receiving RAR. Optionally, the PRACH received by the network device is transmitted by the terminal device in the case where the stored energy of the terminal device meets the product of the energy requirement for repetition of PRACH and a first proportion, meets the product of the energy requirement for detecting RAR and a second proportion, and meets the energy requirement for receiving RAR. Optionally, the PRACH received by the network device is transmitted by the terminal device in the case where the stored energy of the terminal device meets the product of the energy requirement for repetition of PRACH and a first proportion, and meets the product of the energy requirement for detecting RAR and a second proportion, and meets the product of the energy requirement for receiving RAR and a third proportion. Optionally, the PRACH received by the network device is transmitted by the terminal device in the case where the stored energy of the terminal device meets the energy requirement for repetition of PRACH and a first proportion, meets the energy requirement for detecting RAR, and meets the product of the energy requirement for receiving RAR and a third proportion.

In some embodiments, the first proportion is predefined, or alternatively, determined based on parameters indicated by the network device. In some embodiments, the first proportion is related to the time interval between adjacent PRACH resources in the PRACH resource set. Optionally, the first proportion is negatively correlated with the time interval between adjacent PRACH resources in the PRACH resource set. The larger the time interval between adjacent PRACH resources in the PRACH resource set, the smaller the first proportion. The smaller the time interval between adjacent PRACH resources in the PRACH resource set, the larger the first proportion. In some embodiments, the second proportion is predefined, or alternatively, determined based on parameters indicated by the network device. In some embodiments, the second proportion is related to the time interval between adjacent PRACH resources in the PRACH resource set. In some embodiments, the third proportion is predefined, or alternatively, determined based on parameters indicated by the network device. In some embodiments, the third proportion is related to the time interval between adjacent PRACH resources in the PRACH resource set.

In some embodiments, the energy requirement for transmitting PRACH is determined based on the transmit

power of the PRACH. Optionally, the transmit power of the PRACH is determined based on at least one of: a target received power, a path loss, or a power offset. The target received power is configured by the apparatus. The path loss is obtained by the terminal device measuring the downlink signal. The power offset is configured by the higher layer and is configured according to the format of the random access preamble.

In some embodiments, the above apparatus further includes:

**a transmitting module, configured to** transmit the target received power. The target received power is used to indicate the transmit power of PRACH for the terminal device.

In some embodiments, the transmission resource of the received PRACH is determined based on the stored energy of the terminal device. In some embodiments, the PRACH resource used for the received PRACH is determined based on the stored energy of the terminal device. In some embodiments, the PRACH resource set used for the received PRACH is determined based on the stored energy of the terminal device.

Optionally, the PRACH resource set used for the received PRACH includes a target PRACH resource, which is the PRACH resource used by the terminal device for performing a single transmission of PRACH. Optionally, the PRACH resource set used for the received PRACH includes a target PRACH resource set, which is the PRACH resource set used by the terminal device for performing repetition of PRACH. The number of PRACH resources in the PRACH resource set used for the received PRACH is greater than or equal to the number of PRACH resources required for repetition of PRACH.

In some embodiments, the configurations of at least two PRACH resources within different PRACH resource sets are distinct. For example, the time intervals between adjacent PRACH resources in different PRACH resource sets are different. Optionally, the time interval between adjacent PRACH resources in the PRACH resource set used for the received PRACH is negatively correlated with the stored energy of the terminal device. The greater the stored energy of the terminal device transmitting the PRACH, the smaller the time interval between adjacent PRACH resources in the PRACH resource set used for the received PRACH. The smaller the stored energy of the terminal device transmitting the PRACH, the larger the time interval between adjacent PRACH resources in the PRACH resource set used for the received PRACH.

In some embodiments, the PRACH resource set used for the received PRACH is either the first PRACH resource set or the second PRACH resource set. The time interval between adjacent PRACH resources in the first PRACH resource set is a first time interval, and the time interval between adjacent PRACH resources in the second PRACH resource set is a second time interval, where the first time interval is less than the second time interval. The stored energy of the terminal device corresponding to the first PRACH resource set is greater than a first threshold, and the stored energy of the terminal device corresponding to the second PRACH resource set is greater than a second threshold, where the first threshold is greater than or equal to the second threshold.

In some embodiments, the PRACH resource set used for the received PRACH includes a second number of PRACH resources, where the second number is greater than the first number, and the first number represents the transmission times for repetition of PRACH.

In some embodiments, different random access preambles exist in the PRACH resource set used for the received PRACH. Different random access preambles are associated with different stored energies. Optionally, there is a one-to-one mapping relationship between different random access preambles and different stored energies. Illustratively, as shown in Table 1 or Table 2 above.

In some embodiments, different PRACH resources within the PRACH resource set used for the received PRACH belong to different PRACH occasions. Each PRACH occasion corresponds to a RAR reception window. In some embodiments, the PRACH resource set used for the received PRACH includes the PRACH resource belonging to the first PRACH occasion.

Optionally, the start delay of the RAR reception window corresponding to the first PRACH occasion is associated with the stored energy. This start delay refers to the time from the first moment when the PRACH transmission is completed to the second moment when RAR detection begins. In some embodiments, there is a one-to-one mapping relationship between the start delay of the RAR reception window corresponding to the first PRACH occasion and the stored energy. As an example, as shown in Table 3 or Table 4 above.

Optionally, the window size of the RAR reception window corresponding to the first PRACH occasion is associated with the stored energy. This window size can also be understood as the time length corresponding to the reception window, which refers to the time length from the start of detecting the RAR to the end of detecting the RAR. In some embodiments, there is a one-to-one mapping relationship between the window size of the RAR reception window corresponding to the first PRACH occasion and the stored energy. For example, as shown in Table 5 or Table 6 above.

In some embodiments, the transmit power of the received PRACH is determined based on the stored energy of the terminal device.

In some embodiments, the transmit power of the PRACH belonging to the $i^{th}$ transmission occasion among the received PRACHs is determined based on the stored energy of the terminal device. i is a positive integer. Optionally, the transmit power of the PRACH belonging to the $i^{th}$ transmission occasion is the minimum value among the following three: the target transmit power, the power corresponding to the stored energy of the terminal device, and the maximum output power of the terminal device at the $i^{th}$ transmission occasion. The target transmit power is determined based on at least one

of a target received power, a path loss, or a power offset. The target received power is configured by the network device. The path loss is obtained by the terminal device measuring the downlink signal. The power offset is configured by the higher layer according to the format of the random access preamble.

Illustratively, the calculation formula for the target transmit power is: $P_{PRACH,Tx} = P_{PRACH,target} + PL$. $P_{PRACH,target}$ represents the target received power, and PL represents the path loss.

Illustratively, the calculation formula for the transmit power of the PRACH belonging to the $i^{th}$ transmission occasion is: $P_{PRACH}(i) = \min\{P_{CMAX}(i), P_S(i) + P_{PRACH,Tx}\}$ $P_{PRACH,Tx}$ represents the target transmit power of the PRACH, $P_S(i)$ represents the power corresponding to the stored energy of the terminal device, and $P_{CMAX}(i)$ represents the maximum output power of the terminal device at the $i^{th}$ transmission occasion.

In some embodiments, the maximum number of attempts for the received PRACH is determined based on the stored energy of the terminal device.

In some embodiments, the stored energy of the terminal device can support one or multiple attempts in the random access procedure, and the stored energy of the terminal device is consumed during the attempts. Therefore, although the apparatus may configure a maximum number of attempts, due to the randomness of the stored energy of the terminal device, when the stored energy of the terminal device is insufficient to support another attempt, the terminal device needs to terminate further attempts. Therefore, the maximum number of attempts for PRACH is affected by the stored energy of the terminal device.

In some embodiments, the maximum number of attempts for the received PRACH is the number of attempts supported by the stored energy of the terminal device. In other embodiments, the maximum number of attempts for the received PRACH is the minimum value between the maximum number of attempts configured by the apparatus and the number of attempts supported by the stored energy of the terminal device.

**The transmitting module is further configured to** transmit the configured maximum number of attempts.

It should be noted that the apparatus according to the above embodiments is exemplified solely based on the division of the various functional modules to illustrate its functionality. In practical applications, the above functions can be allocated to different functional modules according to actual needs, that is, the content structure of the apparatus can be divided into different functional modules to fulfill all or part of the functions described above.

FIG. 16 illustrates the structural schematic diagram of a communication device according to some embodiments of the present disclosure. The communication device may include: a processor 1601, a receiver 1602, a transmitter 1603, a memory 1604, and a bus 1605.

The processor 1601 includes one or more processing cores, and executes various functional applications and information processing by running software programs and modules.

The receiver 1602 and the transmitter 1603 can be implemented as a transceiver 1606, which can be a communication chip.

The memory 1604 is connected to the processor 1601 via the bus 1605. The memory 1604 can be used to store one or more computer programs, and the processor 1601 is configured to execute the one or more computer programs to perform the various steps performed by the Ambient IoT device, terminal device, or network device in the above method embodiments.

In addition, the memory 1604 can be implemented by any type of volatile or non-volatile storage device, or a combination thereof. The volatile or non-volatile storage device includes, but is not limited to: a random-access memory (RAM), a read-only memory (ROM), an erasable programmable read-only memory (EPROM), an electrically erasable programmable read-only memory (EEPROM), a flash memory, or other solid-state storage technologies, a compact disc ROM (CD-ROM), a digital video disc (DVD), or other optical storage, magnetic tape cartridges, magnetic tapes, disk storage, or other magnetic storage devices.

The embodiments of the present disclosure further provide a computer-readable storage medium storing one or more computer programs. The one or more computer programs, when executed by a processor of an Ambient IoT device, a terminal device, or a network device, cause the Ambient IoT device, the terminal device, or the network device to perform steps of the channel transmission method described above. In some embodiments, the computer-readable storage medium may include a ROM, a RAM, a solid state drive (SSD), an optical disc, or the like. The RAM may include a resistance random access memory (ReRAM) and a dynamic random-access memory (DRAM).

Some embodiments of the present disclosure further provide a chip, which includes a programmable logic circuit and/or one or more program instructions. The chip, when running on a terminal device or network device, causes the terminal device or network device to perform steps in the above channel transmission method.

Some embodiments of the present disclosure further provide a computer program product or computer program, which includes one or more computer instructions stored in a computer-readable storage medium. The one or more computer instructions, when read from the computer-readable storage medium and executed by a processor of a terminal device or network device, cause the terminal device or network device to perform the various steps of the above channel transmission method.

A person skilled in the art should be aware that in the foregoing one or more examples, the functions described in

the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A channel transmission method, performed by a terminal device, wherein the terminal device is powered by harvesting ambient energy, and the method comprises:
determining a transmission mode of a physical random access channel (PRACH) based on stored energy of the terminal device.

2. The method according to claim 1, wherein determining the transmission mode of the PRACH based on the stored energy of the terminal device comprises at least one of:

   determining whether to transmit the PRACH based on the stored energy of the terminal device;
   determining a transmission resource for the PRACH based on the stored energy of the terminal device;
   determining a transmit power of the PRACH based on the stored energy of the terminal device; or
   determining a maximum number of attempts for the PRACH based on the stored energy of the terminal device.

3. The method according to claim 2, wherein determining whether to transmit the PRACH based on the stored energy of the terminal device comprises:

   in a case where the stored energy of the terminal device meets an energy requirement for transmitting the PRACH, determining to transmit the PRACH; or
   in a case where the stored energy of the terminal device meets a first sum value, determining to transmit the PRACH, wherein the first sum value is a sum of an energy requirement for transmitting the PRACH and an energy requirement for detecting a random access response (RAR); or
   in a case where the stored energy of the terminal device meets a second sum value, determining to transmit the PRACH, wherein the second sum value is a sum of an energy requirement for transmitting the PRACH, an energy requirement for detecting the RAR, and an energy requirement for receiving the RAR.

4. The method according to claim 2, wherein determining whether to transmit the PRACH based on the stored energy of the terminal device comprises:

   in a case where the stored energy of the terminal device does not meet an energy requirement for transmitting the PRACH, waiting for a next PRACH transmission occasion and repeatedly determining whether the stored energy of the terminal device meets the energy requirement for transmitting the PRACH; or
   in a case where the stored energy of the terminal device does not meet a first sum value, waiting for a next PRACH transmission occasion and repeatedly determining whether the stored energy of the terminal device meets the first sum value, wherein the first sum value is a sum of an energy requirement for transmitting the PRACH and an energy requirement for detecting a random access response (RAR); or
   in a case where the stored energy of the terminal device does not meet a second sum value, waiting for a next PRACH transmission occasion and repeatedly determining whether the stored energy of the terminal device meets the second sum value, wherein the second sum value is a sum of an energy requirement for transmitting the PRACH, an energy requirement for detecting the RAR, and an energy requirement for receiving the RAR.

5. The method according to claim 3 or 4, wherein the energy requirement for transmitting the PRACH comprises any one of: an energy requirement for a single transmission of the PRACH; or an energy requirement for repetition of the PRACH.

6. The method according to claim 5, wherein determining whether to transmit the PRACH based on the stored energy of

the terminal device comprises:

in a case where the stored energy of the terminal device meets a product of the energy requirement for repetition of the PRACH and a first proportion, determining to transmit the PRACH; or
in a case where the stored energy of the terminal device does not meet a product of the energy requirement for repetition of the PRACH and a first proportion, determining not to transmit the PRACH;
wherein the first proportion is predefined, or determined based on a parameter indicated by a network device.

**7.** The method according to any one of claims 3 to 6, wherein the energy requirement for transmitting the PRACH is determined based on a transmit power of the PRACH.

**8.** The method according to claim 7, wherein the transmit power is determined based on at least one of: a target received power; a path loss; or a power offset.

**9.** The method according to any one of claims 2 to 8, wherein determining the transmission resource for the PRACH based on the stored energy of the terminal device comprises:

selecting a PRACH resource set to be used this time from at least two PRACH resource sets based on the stored energy of the terminal device;
wherein a number of PRACH resources in the PRACH resource set to be used this time is greater than or equal to a number of PRACH resources required for repetition of the PRACH.

**10.** The method according to claim 9, wherein the stored energy of the terminal device is negatively correlated with a time interval between adjacent PRACH resources in the PRACH resource set to be used this time.

**11.** The method according to claim 10, wherein selecting the PRACH resource set to be used this time from at least two PRACH resource sets based on the stored energy of the terminal device comprises:

in a case where the stored energy of the terminal device is greater than a first threshold, selecting a first PRACH resource set from the at least two PRACH resource sets as the PRACH resource set to be used this time;
in a case where the stored energy of the terminal device is less than a second threshold, selecting a second PRACH resource set from the at least two PRACH resource sets as the PRACH resource set to be used this time;
wherein the first threshold is greater than or equal to the second threshold, and a first time interval is less than a second time interval, the first time interval being a time interval between adjacent PRACH resources in the first PRACH resource set, and the second time interval being a time interval between adjacent PRACH resources in the second PRACH resource set.

**12.** The method according to any one of claims 9 to 11, further comprising:

selecting a first number of PRACH resources from the PRACH resource set to be used this time;
wherein the first number represents transmission times for repetition of the PRACH.

**13.** The method according to claim 12, wherein the stored energy is negatively correlated with a time interval between adjacent PRACH resources among the first number of PRACH resources.

**14.** The method according to any one of claims 9 to 13, further comprising:

selecting a first random access preamble from the PRACH resource set to be used this time;
wherein the first random access preamble is associated with the stored energy, and different random access preambles in the PRACH resource set are associated with different stored energies.

**15.** The method according to any one of claims 9 to 14, further comprising:

selecting a PRACH resource belonging to a first PRACH occasion from the PRACH resource set to be used this time;
wherein a start delay of a RAR reception window corresponding to the first PRACH occasion is associated with the stored energy, and/or a window size of the RAR reception window corresponding to the first PRACH occasion is associated with the stored energy.

**16.** The method according to any one of claims 1 to 15, wherein determining the transmit power of the PRACH based on the stored energy of the terminal device comprises:

determining that a transmit power of the PRACH belonging to an $i^{th}$ transmission occasion is a minimum value among: a target transmit power; a power corresponding to the stored energy of the terminal device; and a maximum output power of the terminal device at the $i^{th}$ transmission occasion;
wherein i is a positive integer.

**17.** The method according to any one of claims 1 to 16, wherein determining the maximum number of attempts for the PRACH based on the stored energy of the terminal device comprises:

determining that the maximum number of attempts for the PRACH is a number of attempts supported by the stored energy of the terminal device; or
determining that the maximum number of attempts for the PRACH is a minimum value between a maximum number of attempts configured by a network device and a number of attempts supported by the stored energy of the terminal device.

**18.** A channel transmission method, performed by a network device, the method comprising:
receiving a physical random access channel (PRACH), wherein a transmission mode of the PRACH is determined based on stored energy of a terminal device, the terminal device being powered by harvesting ambient energy.

**19.** A channel transmission apparatus, comprising:
a determining module, configured to determine a transmission mode of a physical random access channel (PRACH) based on stored energy of the apparatus.

**20.** A channel transmission apparatus, comprising:
a receiving module, configured to receive a physical random access channel (PRACH), wherein a transmission mode of the PRACH is determined based on stored energy of a terminal device, the terminal device being powered by harvesting ambient energy.

**21.** A terminal device, comprising:
a processor, configured to determine a transmission mode of a physical random access channel (PRACH) based on stored energy of the terminal device.

**22.** A network device, comprising:

a processor and a receiver connected to the processor;
wherein the receiver is configured to receive a physical random access channel (PRACH), wherein a transmission mode of the PRACH is determined based on stored energy of a terminal device, the terminal device being powered by harvesting ambient energy.

**23.** A computer-readable storage medium, storing one or more computer programs, which when executed by a processor, cause the processor to perform the channel transmission method according to any one of claims 1 to 17, and/or the channel transmission method according to claim 18.

**24.** A chip, comprising a programmable logic circuit and/or one or more program instructions, wherein the chip, when running on a terminal device or network device, causes the terminal device or network device to perform the channel transmission method according to any one of claims 1 to 17, and/or the channel transmission method according to claim 18.

**25.** A computer program product, comprising one or more computer instructions stored in a computer-readable storage medium, wherein the one or more computer instructions, when read from the computer-readable storage medium and executed by a processor of a communication device, cause the communication device to perform the channel transmission method according to any one of claims 1 to 17, and/or the channel transmission method according to claim 18.

**26.** A computer program, wherein the computer program, when executed by a processor of a communication device, causes the communication device to perform the channel transmission method according to any one of claims 1 to 17,

and/or the channel transmission method according to claim 18.

RAR
Downlink transmission
PRACH PRACH PRACH PRACH
Uplink transmission
Repetition
Network device 120
Uplink
Downlink
Terminal device 110
Energy supply/triggering
Backscattering communication
Network device 120
Zero-power device 140
Energy harvesting module 141
Backscattering communication module 142
Low-power computing module 143
Sensor module 144
Memory 145

FIG. 1

FIG. 2

FIG. 3

Determining the transmission mode of PRACH based on the stored energy of the terminal device — 220

FIG. 4

Determining whether to transmit PRACH based on the stored energy of the terminal device — 221

FIG. 5

RAR
Downlink transmission
PRACH
Stored energy
Uplink transmission
E1
E2
E3
Energy consumed for transmitting PRACH
Energy consumed for detecting RAR
Energy consumed for receiving RAR

FIG. 6

RAR
RAR
RAR
Downlink transmission
PRACH
PRACH
PRACH
Uplink transmission
Stored energy
E4
E5
E6
E7
E8
E9
E10
Energy consumed for first transmission of PRACH
Energy consumed for first detection of RAR
Energy consumed for second transmission of PRACH
Energy consumed for second detection of RAR
Energy harvesting
Energy consumed for third transmission of PRACH
Energy consumed for third detection of RAR
Energy consumed for receiving RAR

FIG. 7

RAR
RAR
RAR
Downlink transmission
Uplink transmission
Stored energy
E11
E12
E13
E14
E15
E16
E17
Energy consumed for first repetition of PRACH
Energy consumed for first detection of RAR
Energy consumed for second repetition of PRACH
Energy consumed for second detection of RAR
Energy harvesting
Energy consumed for third repetition of PRACH
Energy consumed for third detection of RAR
Energy consumed for receiving RAR

FIG. 8

Determining the transmission resource for PRACH based on the stored energy of the terminal device — 222

FIG. 9

Determining the transmit power of PRACH based on the stored energy of the terminal device — 223

FIG. 10

Determining the maximum number of attempts for PRACH based on the stored energy of the terminal device — 224

FIG. 11

RAR
RAR
Downlink transmission
PRACH
PRACH
Uplink transmission
Stored energy
E18
E19
E20
First attempt
Second attempt
Energy harvesting

FIG. 12

Receiving PRACH — 320

FIG. 13

Determining module
1410
Transmitting module
1420

FIG. 14

Receiving module
1510

FIG. 15

Processor
1601
Memory
1604
1605
Bus
Transceiver
1602
Receiver
1606
1603
Transmitter

FIG. 16

**INTERNATIONAL SEARCH REPORT**

International application No. **PCT/CN2023/131694**

**A. CLASSIFICATION OF SUBJECT MATTER**

H04W 74/08(2024.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, VEN: 标签, 不发送, 不够, 不足, 策略, 初始消息, 储, 储能, 次数, 低功耗, 低功率, 低耗能, 低能耗, 第一消息, 电荷, 电量, 电能, 发送, 发送功率, 方式, 功耗, 功率, 耗能, 环境能, 获, 零功耗, 零功率, 零耗能, 零能耗, 满足, 能, 能耗, 能量, 前导码, 确定, 是否发送, 随机接入, 无源, 消息1, 选择, 资源, 足够, Tag, transmit+, insufficient, policy, initial message, storage, energy storage, number of times, low power, low energy consumption, first message, charge, power, manner, consumption, environmental energy, acquisition, zero, fulfillment, preamble, determination, random access, passive, message 1, selection, resource, sufficient, PRACH, RACH

**C. DOCUMENTS CONSIDERED TO BE RELEVANT**

| Category* | Citation of document, with indication, where appropriate, of the relevant passages | Relevant to claim No. |
|---|---|---|
| X | CN 116155940 A (SHENZHEN AI-LINK NETWORK CO., LTD.) 23 May 2023 (2023-05-23)<br>description, paragraphs [0002]-[0117] | 1-5, 7, 8, 16-26 |
| X | WO 2023193255 A1 (GUANGDONG OPPO MOBILE TELECOMMUNICATIONS CORP., LTD.) 12 October 2023 (2023-10-12)<br>description, page 6, lines 5-18 | 1-5, 7, 8, 16-26 |
| X | CN 109039535 A (ZHEJIANG UNIVERSITY OF TECHNOLOGY) 18 December 2018 (2018-12-18)<br>description, paragraphs [0033]-[0042] | 1-5, 7, 8, 16-26 |
| X | CN 116502655 A (HUAWEI TECHNOLOGIES CO., LTD. et al.) 28 July 2023 (2023-07-28)<br>description, paragraphs [0187]-[0193] | 1-5, 7, 8, 16-26 |

☑ Further documents are listed in the continuation of Box C. ☑ See patent family annex.

* Special categories of cited documents:

- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 January 2024** | **22 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/131694**

**C. DOCUMENTS CONSIDERED TO BE RELEVANT**

| Category* | Citation of document, with indication, where appropriate, of the relevant passages | Relevant to claim No. |
|---|---|---|
| A | WO 2023121682 A1 (NOKIA TECHNOLOGIES OY et al.) 29 June 2023 (2023-06-29) entire document | 1-26 |
| A | WO 2023030744 A1 (SONY GROUP CORP. et al.) 09 March 2023 (2023-03-09) entire document | 1-26 |

Form PCT/ISA/210 (second sheet) (July 2022)

**INTERNATIONAL SEARCH REPORT**
**Information on patent family members**

International application No.
**PCT/CN2023/131694**

| Patent document cited in search report | | | Publication date (day/month/year) | Patent family member(s) | Publication date (day/month/year) |
|---|---|---|---|---|---|
| CN | 116155940 | A | 23 May 2023 | None | |
| WO | 2023193255 | A1 | 12 October 2023 | None | |
| CN | 109039535 | A | 18 December 2018 | None | |
| CN | 116502655 | A | 28 July 2023 | None | |
| WO | 2023121682 | A1 | 29 June 2023 | None | |
| WO | 2023030744 | A1 | 09 March 2023 | None | |

Form PCT/ISA/210 (patent family annex) (July 2022)